(19) **Europäisches Patentamt / European Patent Office / Office européen des brevets**

(11) **EP 4 693 013 A1**

(12) **EUROPEAN PATENT APPLICATION**
published in accordance with Art. 153(4) EPC

(43) Date of publication:
**11.02.2026 Bulletin 2026/07**

(21) Application number: **24838526.2**

(22) Date of filing: **14.06.2024**

(51) International Patent Classification (IPC):
**G06F 3/04883** *(2022.01)*

(52) Cooperative Patent Classification (CPC):
**G06F 3/0481; G06F 3/0484; G06F 3/04883;
G06F 9/451**

(86) International application number:
**PCT/CN2024/099430**

(87) International publication number:
**WO 2025/011268 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.07.2023 CN 202310861306**

(71) Applicant: **Huawei Technologies Co., Ltd.
Shenzhen, Guangdong 518129 (CN)**

(72) Inventors:
- LIU, Di
  **Shenzhen, Guangdong 518129 (CN)**
- ZHENG, Tao
  **Shenzhen, Guangdong 518129 (CN)**
- YUAN, Quan
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **HANDWRITTEN-CONTENT DISPLAY METHOD, AND ELECTRONIC DEVICE**

(57) This application discloses a method for displaying handwritten content and an electronic device, and relates to the field of terminal technologies, to reduce a display latency of the handwritten content in a process of handwriting the content on a content interface by a user, improve a touch latency of display, and improve user experience. In this solution, when the user performs a handwriting operation on the content interface, such as line drawing, writing, circling, and marking, the electronic device may create a system-level transparent layer, for example, a global layer, that is independent of a layer at which the content interface is located and that is superimposed on the layer at which the content interface is located, perform stroke estimate based on the handwriting operation of the user and a historical writing stroke, and draw, based on a touch point corresponding to the handwriting operation of the user and predicted points, a corresponding writing stroke at the global layer.

FIG. 7

Processed by Luminess, 75001 PARIS (FR)

## Description

This application claims priority to Chinese Patent Application No. 202310861306.5, filed with the China National Intellectual Property Administration on July 11, 2023 and entitled "METHOD FOR DISPLAYING HANDWRITTEN CONTENT AND ELECTRONIC DEVICE", which is incorporated herein by reference in its entirety.

## TECHNICAL FIELD

This application relates to the field of terminal technologies, and in particular, to a method for displaying handwritten content and an electronic device.

## BACKGROUND

With rapid development of hardware technologies, software technologies, and application display technologies of electronic devices, to provide better usage experience for users, increasingly more electronic devices support the users in inputting information such as image drawing, line drawing, marking, and annotating on a content interface (for example, an application interface) displayed by the electronic devices.

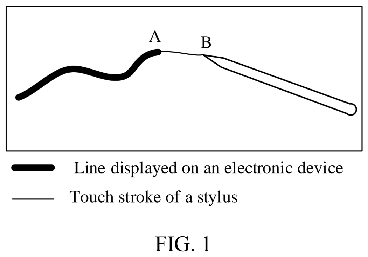

For example, a user draws an image on a content interface. When receiving an operation of image drawing on the content interface by the user, an electronic device usually extracts point information from the drawing operation, generates an input event, then performs subsequent interface drawing, rendering, and composition based on the input event, and finally performs sending for display. In this case, information drawn by the user on the content interface at a specific moment is usually finally displayed on the content interface after a period of time, and this display latency brings poor user experience. Especially, for a continuous touchscreen interaction process like image drawing, line drawing, and marking, a small display latency can also be obviously perceived by the user. This greatly affects a touch latency of device display. For example, as shown in FIG. 1, when a user has drawn to a location of a point B, an electronic device may update and display content drawn by the user at a location of a point A. Therefore, how to reduce a display latency of content handwritten by a user on a content interface is an urgent problem to be resolved.

## SUMMARY

This application provides a method for displaying handwritten content and an electronic device, to reduce a display latency of the handwritten content in a process of handwriting the content on a content interface by a user, improve a touch latency of display, and improve user experience.

To achieve the foregoing objectives, the following technical solutions are used in this application.

According to a first aspect, a method for displaying handwritten content is provided, where the method is applied to an electronic device, for example, a first electronic device, and the method includes: When displaying a content interface, the first electronic device creates, in response to an operation of triggering a handwriting function by a user, a global layer superimposed on an application layer corresponding to the content interface, where the global layer is a transparent layer; the first electronic device determines a corresponding touch point based on a handwriting operation of the user on the content interface; the first electronic device draws a corresponding writing stroke at the global layer based on the touch point; and the first electronic device displays a second interface after composing the application layer and the global layer, where the second interface includes the content interface and the writing stroke.

For example, the content interface may be an interface of any application or applet that supports handwriting by the user, for example, a memo interface, a drawing interface, or a handwriting interface.

For example, the first electronic device may draw the writing stroke at the global layer by using a global drawing service. For example, the handwriting operation may include but is not limited to an operation of the user on the content interface by using a finger or a touch auxiliary tool. The touch auxiliary tool may include but is not limited to any of the following tools: a stylus, a touch stylus, and a touch ball.

For example, the foregoing handwriting operation may include but is not limited to any one of the following operations of the user on the content interface: line drawing, writing, circling, and marking.

According to the solution provided in the first aspect, when the user performs a handwriting operation such as line drawing, writing, circling, and marking on the content interface, the first electronic device may create a system-level transparent layer, for example, the global layer, that is independent of a layer at which the content interface is located and that is superimposed on the layer at which the content interface is located, and draw, based on the touch point corresponding to the handwriting operation of the user, the corresponding writing stroke at the global layer. In the foregoing process, the writing stroke is only drawn at the global layer, and content of the drawing is simple. Therefore, time required in each step in the drawing process is shortened, and a touch latency of writing stroke display is improved.

In addition, because the global layer created by the first electronic device is a system-level layer, a problem of a poor touch latency of displaying an interface can be resolved by using the system-level general solution without the need of performing development and upgrade, by each application developer, on an application of the application developer.

In addition, regardless of which application the user inputs content on a content interface, a processing process, implementation details, and the like of the system-level general solution are consistent.

In addition, in the foregoing process, because the global layer is a transparent layer that is independent of the layer at which the content interface is located and that is superimposed on the layer at which the content interface is located, from a perspective of a visual effect of the user, the writing stroke seen by the user is like writing directly on the content interface, so that visual experience of the user is good.

In a possible implementation, that the first electronic device draws the corresponding writing stroke at the global layer based on the touch point includes: The first electronic device determines a plurality of predicted points based on the touch point and a historical writing stroke; and the first electronic device draws the corresponding writing stroke at the global layer based on the touch point and the plurality of predicted points. Based on this, because the writing stroke drawn at the global layer is drawn in advance with reference to the predicted points, a touch latency of writing stroke display can be further improved.

In a possible implementation, the method further includes: The first electronic device draws a corresponding writing stroke at the application layer based on the handwriting operation. Based on this, a conventional mechanism of drawing a handwriting stroke at the application layer may be retained, and an existing processing mechanism is not affected. In addition, because the writing stroke at the application layer is drawn based on an actual sliding route of a stylus or a finger of the user on a screen, accuracy of the finally displayed handwriting stroke may be further improved.

In a possible implementation, the content interface is generated based on projection data sent by a second electronic device, and the method further includes: The first electronic device sends, to the second electronic device, operation information corresponding to the handwriting operation, for the second electronic device to perform corresponding drawing at the application layer based on the operation information; and the first electronic device receives interface data from the second electronic device, where the interface data includes information about a writing stroke corresponding to the handwriting operation. Based on this, an application scenario of this solution may be extended to a projection scenario, to resolve a problem of a poor touch latency of displaying a writing stroke in the projection scenario.

In a possible implementation, the historical writing stroke is drawn at the application layer, and that the first electronic device draws the corresponding writing stroke at a global layer based on the touch point and the plurality of predicted points includes: The first electronic device draws the corresponding writing stroke at the global layer based on the touch point and the plurality of predicted points in a brush mode consistent with that of the historical writing stroke. Based on this, because the historical writing stroke drawn at the application layer is drawn based on an actual sliding route of a stylus or a finger of the user on a screen, stroke estimate is performed based on the historical writing stroke, so that a deviation between the predicted points and future actual touch points can be reduced, and accuracy of a finally displayed handwriting stroke can be improved.

In a possible implementation, the method further includes: The first electronic device obtains a brush mode parameter corresponding to the historical writing stroke, where the brush mode parameter includes one or more of the following: a brush type, a line color, a line width, and a line texture. Based on this, consistency between the writing stroke at the global layer and the writing stroke at the application layer can be ensured, to maintain consistency between a display effect of the writing stroke drawn at the global layer and a display effect of the writing stroke drawn at the application layer, and improve user experience.

In a possible implementation, that the first electronic device obtains the brush mode parameter corresponding to a latest writing stroke in the historical writing stroke includes: The first electronic device performs image analysis on the latest writing stroke in the historical writing stroke, and obtains the brush mode parameter corresponding to the latest writing stroke. Based on this, the brush mode used for the historical writing stroke can be obtained smoothly and accurately.

For example, the first electronic device may first determine the latest writing stroke in the historical writing stroke, for example, determine the latest writing stroke at the application layer by comparing a current frame of image at the application layer with a previous frame of image at the application layer. Then, the first electronic device may perform image analysis on the identified latest writing stroke to obtain one or more information such as a brush type, a line color, a line width, and a line texture corresponding to the latest writing stroke.

In a possible implementation, the method further includes: In a process of drawing the writing stroke at the global layer, the first electronic device erases, from the global layer, a second handwriting stroke corresponding to a first handwriting stroke drawn at the application layer. Based on this, on the premise that the user can normally see writing strokes corresponding to all handwriting operations, complexity of subsequent drawing at the global layer may be reduced, drawing of the writing stroke at the global layer is further improved, and a touch latency of writing stroke display is further improved.

In a possible implementation, the method further includes: In a process of drawing the writing stroke at the global layer, the first electronic device erases a handwriting stroke drawn at the global layer before a preset time period. Based on this, on the premise that the user can normally see writing strokes corresponding to all handwriting operations, complexity of subsequent drawing at the global layer may be reduced, drawing of the writing stroke at the global layer is further improved, and a touch latency of writing stroke display is further improved.

According to a second aspect, an electronic device is provided, where the electronic device includes: a display unit, configured to display a content interface; a global drawing unit, configured to: when the display unit displays the content interface, create, in response to an operation of triggering a handwriting function by a user, a global layer superimposed on an application layer corresponding to the content interface, where the global layer is a transparent layer; determine a corresponding touch point based on a handwriting operation of the user on the content interface; and draw a corresponding writing stroke at the global layer based on the touch point; and a layer composition unit, configured to display a second interface by using the display unit after composing the application layer and the global layer, where the second interface includes the content interface and the writing stroke.

For example, the content interface may be an interface of any application or applet that supports handwriting by the user, for example, a memo interface, a drawing interface, or a handwriting interface.

For example, the first electronic device may draw the writing stroke at the global layer by using a global drawing service.

For example, the handwriting operation may include but is not limited to an operation of the user on the content interface by using a finger or a touch auxiliary tool. The touch auxiliary tool may include but is not limited to any of the following tools: a stylus, a touch stylus, and a touch ball.

For example, the foregoing handwriting operation may include but is not limited to any one of the following operations of the user on the content interface: line drawing, writing, circling, and marking.

According to the solution provided in the first aspect, when the user performs a handwriting operation such as line drawing, writing, circling, and marking on the content interface, the first electronic device may create a system-level transparent layer, for example, the global layer, that is independent of a layer at which the content interface is located and that is superimposed on the layer at which the content interface is located, and draw, based on the touch point corresponding to the handwriting operation of the user, the corresponding writing stroke at the global layer. In the foregoing process, the writing stroke is only drawn at the global layer, and content of the drawing is simple. Therefore, time required in each step in the drawing process is shortened, and a touch latency of writing stroke display is improved. In addition, because the global layer created by the first electronic device is a system-level layer, a problem of a poor touch latency of displaying an interface can be resolved by using the system-level general solution without the need of performing development and upgrade, by each application developer, on an application of the application developer. In addition, regardless of which application the user inputs content on a content interface, a processing process, implementation details, and the like of the system-level general solution are consistent. In addition, in the foregoing process, because the global layer is a transparent layer that is independent of the layer at which the content interface is located and that is superimposed on the layer at which the content interface is located, from a perspective of a visual effect of the user, the writing stroke seen by the user is like writing directly on the content interface, so that visual experience of the user is good.

In a possible implementation, that the global drawing unit draws the corresponding writing stroke at the global layer based on the touch point includes: The global drawing unit determines a plurality of predicted points based on the touch point and a historical writing stroke; and the global drawing unit draws the corresponding writing stroke at the global layer based on the touch point and the plurality of predicted points. Based on this, because the writing stroke drawn at the global layer is drawn in advance with reference to the predicted points, a touch latency of writing stroke display can be further improved.

In a possible implementation, the electronic device further includes: an application drawing unit, configured to draw a corresponding writing stroke at the application layer based on the handwriting operation. Based on this, a conventional mechanism of drawing a handwriting stroke at the application layer may be retained, and an existing processing mechanism is not affected. In addition, because the writing stroke at the application layer is drawn based on an actual sliding route of a stylus or a finger of the user on a screen, accuracy of the finally displayed handwriting stroke may be further improved.

In a possible implementation, the content interface is generated based on projection data sent by a second electronic device, and the electronic device further includes: a communication unit, configured to: send, to the second electronic device, operation information corresponding to the handwriting operation, for the second electronic device to perform corresponding drawing at the application layer based on the operation information; and receive interface data from the second electronic device, where the interface data includes information about a writing stroke corresponding to the handwriting operation. Based on this, an application scenario of this solution may be extended to a projection scenario, to resolve a problem of a poor touch latency of displaying a writing stroke in the projection scenario.

In a possible implementation, the historical writing stroke is drawn at the application layer, and that the global drawing unit draws the corresponding writing stroke at a global layer based on the touch point and the plurality of predicted points includes: The global drawing unit draws the corresponding writing stroke at the global layer based on the touch point and the plurality of predicted points in a brush mode consistent with that of the historical writing stroke. Based on this, because the historical writing stroke drawn at the application layer is drawn based on an actual sliding route of a stylus or a finger of the user on a screen, stroke estimate is performed based on the historical writing stroke, so that a deviation between the predicted points and future actual touch points can be reduced, and accuracy of a finally displayed handwriting stroke can be improved.

In a possible implementation, the global drawing unit is further configured to obtain a brush mode parameter corresponding to the historical writing stroke, where the brush mode parameter includes one or more of the following: a brush type, a line color, a line width, and a line texture. Based on this, consistency between the writing stroke at the global layer and the writing stroke at the application layer can be ensured, to maintain consistency between a display effect of the writing stroke drawn at the global layer and a display effect of the writing stroke drawn at the application layer, and improve user experience.

In a possible implementation, that the global drawing unit obtains the brush mode parameter corresponding to a latest writing stroke in the historical writing stroke includes: The global drawing unit performs image analysis on the latest writing stroke in the historical writing stroke, and obtains the brush mode parameter corresponding to the latest writing stroke. Based on this, the brush mode used for the historical writing stroke can be obtained smoothly and accurately.

For example, the global drawing unit may first determine the latest writing stroke in the historical writing stroke, for example, determine the latest writing stroke at the application layer by comparing a current frame of image at the application layer with a previous frame of image at the application layer. Then, the global drawing unit may perform image analysis on the identified latest writing stroke to obtain one or more information such as a brush type, a line color, a line width, and a line texture corresponding to the latest writing stroke.

In a possible implementation, the global drawing unit is further configured to: in a process of drawing the writing stroke at the global layer, erase, from the global layer, a second handwriting stroke corresponding to a first handwriting stroke drawn at the application layer. Based on this, on the premise that the user can normally see writing strokes corresponding to all handwriting operations, complexity of subsequent drawing at the global layer may be reduced, drawing of the writing stroke at the global layer is further improved, and a touch latency of writing stroke display is further improved.

In a possible implementation, the global drawing unit is further configured to: in a process of drawing the writing stroke at the global layer, erase a handwriting stroke drawn at the global layer before a preset time period. Based on this, on the premise that the user can normally see writing strokes corresponding to all handwriting operations, complexity of subsequent drawing at the global layer may be reduced, drawing of the writing stroke at the global layer is further improved, and a touch latency of writing stroke display is further improved.

According to a third aspect, an electronic device is provided, where the electronic device includes: a display, configured to display content, such as a content interface and a handwriting stroke; a memory, configured to store computer program instructions; and a processor, configured to execute the computer program instructions, to support the electronic device in implementing the method according to any one of the possible implementations of the first aspect.

According to a fourth aspect, a communication system is provided, where the communication system includes a first electronic device and a second electronic device, the second electronic device projects a content interface onto the first electronic device, and the first electronic device is configured to implement the method according to any one of the possible implementations of the first aspect.

According to a fifth aspect, a computer-readable storage medium is provided. The computer-readable storage medium stores computer program instructions. When the computer program instructions are executed by a processor, the method according to any one of the possible implementations of the first aspect is implemented.

According to a sixth aspect, a computer program product including instructions is provided. When the computer program product runs on a computer, the computer is caused to implement the method according to any one of the possible implementations of the first aspect.

According to a seventh aspect, a chip system is provided. The chip system includes a processing circuit and a storage medium. The storage medium stores computer program instructions. When the computer program instructions are executed by a processor, the method according to any one of the possible implementations of the first aspect is implemented. The chip system may include a chip, or may include a chip and another discrete component.

**BRIEF DESCRIPTION OF DRAWINGS**

FIG. 1 is a diagram of a conventional interface display effect;
FIG. 2 is a diagram of an interface display process according to an embodiment of this application;
FIG. 3 is a diagram of an effect of a stroke estimate mechanism according to an embodiment of this application;
FIG. 4 is a diagram of a hardware structure of an electronic device according to an embodiment of this application;

FIG. 5 is a diagram of a software structure of an electronic device according to an embodiment of this application;

FIG. 6 is a diagram of two application scenarios according to an embodiment of this application;

FIG. 7 is a flowchart of a method for displaying handwritten content according to an embodiment of this application;

FIG. 8 is a diagram of two operations for triggering a handwriting function according to an embodiment of this application;

FIG. 9 is a diagram of a scenario in which a user performs a handwriting operation according to an embodiment of this application;

FIG. 10 is a diagram of a process of displaying handwritten content according to an embodiment of this application;

FIG. 11 is a diagram of another process of displaying handwritten content according to an embodiment of this application;

FIG. 12 is a diagram of a solution for erasing a writing stroke from a global layer according to an embodiment of this application;

FIG. 13 is a diagram of another solution for erasing a writing stroke from a global layer according to an embodiment of this application;

FIG. 14 is a diagram of comparison of touch latency effects according to an embodiment of this application;

FIG. 15 is a diagram of comparison of brush learning effects according to an embodiment of this application;

FIG. 16 is a diagram of a process of determining a newly added writing stroke at an application layer according to an embodiment of this application;

FIG. 17 is a diagram of a method for obtaining a line color corresponding to a newly added writing stroke according to an embodiment of this application;

FIG. 18 is a diagram of a method for obtaining a line width corresponding to a newly added writing stroke according to an embodiment of this application;

FIG. 19 is a diagram of another method for obtaining a line width corresponding to a newly added writing stroke according to an embodiment of this application;

FIG. 20 is a diagram of a method for obtaining a line texture corresponding to a newly added writing stroke according to an embodiment of this application;

FIG. 21 is a diagram of a process of displaying handwritten content in a multi-device scenario according to an embodiment of this application; and

FIG. 22 is a block diagram of a structure of an electronic device according to an embodiment of this application.

## DESCRIPTION OF EMBODIMENTS

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first", "second", and the like are merely intended to distinguish between different objects, and impose no limitation on locations, sequences, priorities, quantities, content, or the like of the described objects. For example, if a described object is a "field", ordinal numbers before "fields" in a "first field" and a "second field" do not limit a location or an order between the "fields". The "first" and the "second" do not limit whether the "fields" modified by the "first" and "second" are in a same message, and the "first" and the "second" do not limit a sequence of the "first field" and the "second field". For another example, if a described object is a "level", ordinal numbers before "levels" in a "first level" and a "second level" do not limit a priority between the "levels". For another example, a quantity of described objects is not limited by an ordinal number, and may be one or more objects. For example, for a "first device", a quantity of "devices" may be one or more. In addition, objects modified by different prefixes may be the same or different. For example, if a described object is a "device", a "first device" and a "second device" may be a same type of device, or different types of devices. For another example, if a described object is "information", "first information" and "second information" may be information of a same content or information of different content. In conclusion, in embodiments of this application, use of the prefix words, for example, ordinal numbers, used to distinguish between the described objects constitutes no limitation on the described objects. For descriptions of the described objects, refer to context descriptions in claims or embodiments. Use of the prefix words should not constitute a redundant limitation.

In addition, in embodiments of this application, "connection" may indicate a direct connection or an indirect connection, or may indicate an electrical connection or a communication connection. For example, a connection between two electrical elements A and B may mean that A is directly connected to B, or may mean that A is indirectly connected to B through another electrical element or a connection medium, or may mean that A is indirectly connected to B through another communication device or a communication medium, provided that A and B can communicate with each other.

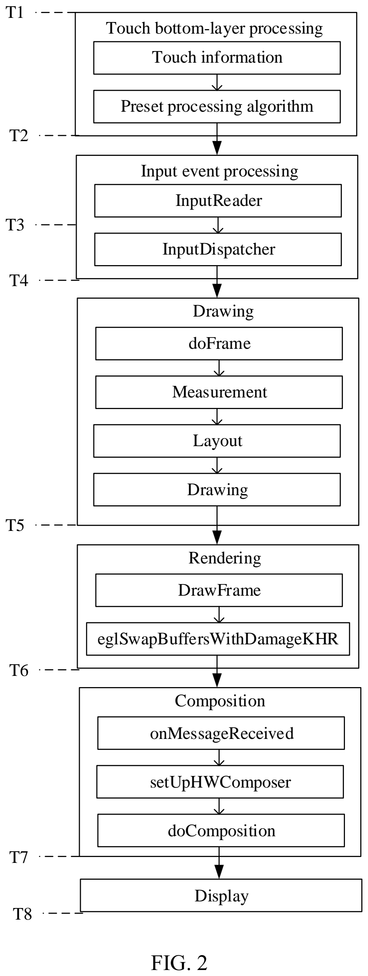

In a process in which a user performs handwriting input of information such as image drawing, line drawing, and marking on a content interface of an electronic device: The electronic device continuously performs, based on detected operation information of the user, phases such as a touch bottom-layer processing phase, an input event processing phase, a drawing phase, a rendering phase, and a composition phase shown in FIG. 2, and finally displays content handwritten by the user at a corresponding location on the content interface.

The touch bottom-layer processing phase is mainly used to obtain the operation information of the user based on raw data collected by the electronic device, for example, raw data collected by the electronic device by using a touch sensor on a display. The operation information may include but is not limited to information such as a touch location of the user on a touchscreen and touch pressure. In an example, as shown in FIG. 2, the electronic device may obtain the operation information of the user after processing, according to a preset processing algorithm, the raw data collected by the electronic device.

The input event processing phase is mainly used to convert the operation information of the user into a specific input event and distribute the input event. In an example, as shown in FIG. 2, after converting the operation information of the user into the specific input event by using InputReader, the electronic device may distribute the input event subsequently by using InputDispatcher, for example, distribute the input event to a corresponding application activity (Activity).

The drawing phase is mainly used to draw a to-be-displayed interface layer. In an example, as shown in FIG. 2, the electronic device may draw the to-be-displayed interface layer by executing a doFrame command. The drawing phase may include the following processes: measurement (measure), layout (layout), and drawing (draw). The measurement process is used to obtain and save a size of each View and ViewGrop corresponding to the content interface based on control attribute settings in an interface layout file and code. The layout process is used to determine a display location of each control on the content interface based on the information obtained through measurement. The drawing process is used to draw a corresponding interface layer on a canvas (canvas) after the display location of each control is determined, to construct a drawing instruction.

The rendering phase is mainly used to perform interface rendering, for example, brightness, contrast, and saturation, on the drawn interface layer. In an example, as shown in FIG. 2, the electronic device may perform interface rendering on the drawn interface layer by executing a DrawFrame command, and then buffer the drawn interface layer to a buffer by invoking an eglSwapBuffers WithDamageKHR function.

The composition phase is mainly used to superimpose and combine a plurality of rendered layers, for example, rendered layers obtained from the buffer in an appropriate order of overlapping, to obtain a complete image frame. In an example, as shown in FIG. 2, the electronic device may enter multi-layer composition logic by calling an onMessageReceived function. For example, after entering the multi-layer composition logic, the electronic device may obtain a quantity of to-be-composed layers and an attribute of each layer by calling a setUpHWComposer function, and update a layer list and a layer attribute. Further, the electronic device may compose a plurality of layers by calling a doComposition function.

After completing layer composition, the electronic device may invoke a display driver (for example, a liquid crystal display (liquid crystal display, LCD) driver) by using a display stocker status (display stocker status, DSS) function, and send a composed layer to the display for display based on a specified display area.

For example, with reference to FIG. 2, FIG. 2 is a diagram of an interface display process according to an embodiment of this application. As shown in FIG. 2, it is assumed that a moment at which the user touches the display of the electronic device is T1, a moment at which the electronic device completes operation information extraction is T2, a moment at which the electronic device generates the input event is T3, a moment at which the electronic device completes input event distribution is T4, a moment at which the electronic device completes layer drawing is T5, a moment at which the electronic device completes layer rendering is T6, a moment at which the electronic device completes layer composition is T7, and a moment at which the electronic device finally displays the content on the display is T8, which is a moment after a time consumed by a process of sending for display on a basis of T7. Time consumed in each of the foregoing phases affects a touch latency of display of the electronic device. In view of this, based on an existing interface display mechanism, content written by the user on the content interface at the moment T1 is displayed at a corresponding location on the content interface after duration of T8-T1. Consequently, a touch latency of the display is poor.

The touch latency may be represented by a latency from inputting by the user on the touchscreen to displaying a corresponding writing stroke on the touchscreen. A smaller latency indicates a better touch latency, and a larger latency indicates a poorer touch latency.

To reduce a display latency of the electronic device, in a possible implementation, a display refresh rate or a processing frequency of the electronic device may be increased, to improve a touch latency of writing stroke display. However, the foregoing manner of increasing the display refresh rate or the processing frequency increases power consumption of the electronic device. In addition, compared with high time consumption of each phase in a writing stroke drawing process, this manner can compensate for a limited latency. Therefore, a touch latency of writing stroke display cannot be well improved.

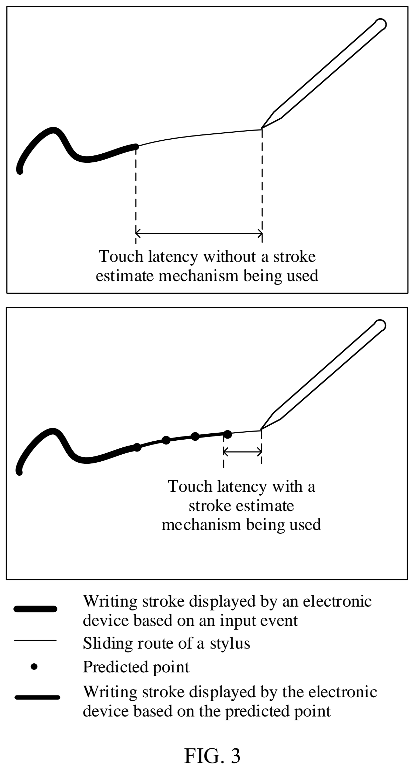

To reduce a display latency of the electronic device, in another possible implementation, a developer of an application that supports a user in entering information in a touch manner may improve the application, so that the application has a function of drawing a touch stroke of the user in advance according to a stroke estimate mechanism. For example, according to the stroke estimate mechanism, the electronic device may predict a possible touch point in a future time period or predict a preset quantity of possible touch points in the future based on an actual continuous historical touch stroke entered by the user, and perform drawing, rendering, and composition in advance based on the predicted point, to reduce a display latency of the electronic device, and improve a touch latency of display of the electronic device. For example, as shown in FIG. 3, in comparison with an interface display process in which the stroke estimate mechanism is not used, in an interface display process in which the stroke estimate mechanism is used, a touch latency of interface display can be greatly reduced.

However, in the foregoing method, each application developer needs to perform development and upgrade on an application of the application developer, and a workload is heavy. In addition, because application development and upgrade work of each application developer is performed independently, implementation details, algorithm precision, and the like of specific stroke estimate mechanisms may be different. As a result, the user feels different touch latency effects of display when using different applications on the electronic device.

To resolve the problem in the foregoing solution, an embodiment of this application provides a method for displaying handwritten content. Based on the method, an electronic device may provide a system-level transparent layer that is independent of a layer at which a content interface is located and that is superimposed on the layer at which the content interface is located, where the transparent layer is used for drawing a writing stroke determined by a system based on operation information of a user operation and a predicted point. As a system-level general solution, this solution can resolve a problem of a poor touch latency of interface display without the need of performing development and upgrade, by each application developer, on an application of the application developer. In addition, because the solution is a system-level general solution, no matter which application the user inputs content on the content interface, processing processes, implementation details, and the like are unchanged. Therefore, when using any application, the user feels that a touch latency effect of display is unchanged.

The electronic device in this embodiment of this application may be an electronic device having a touchscreen. For example, the electronic device may include but is not limited to a smartphone, a netbook, a tablet computer, a handwriting tablet, a smartwatch, a smart band, a telephone watch, a smart camera, a palmtop computer, a vehicle-mounted computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device, a smart television, a projection device, or a motion sensing game console in a human-computer interaction scenario. Alternatively, the electronic device may be an electronic device of another type or structure having a touchscreen. This is not limited in this application.

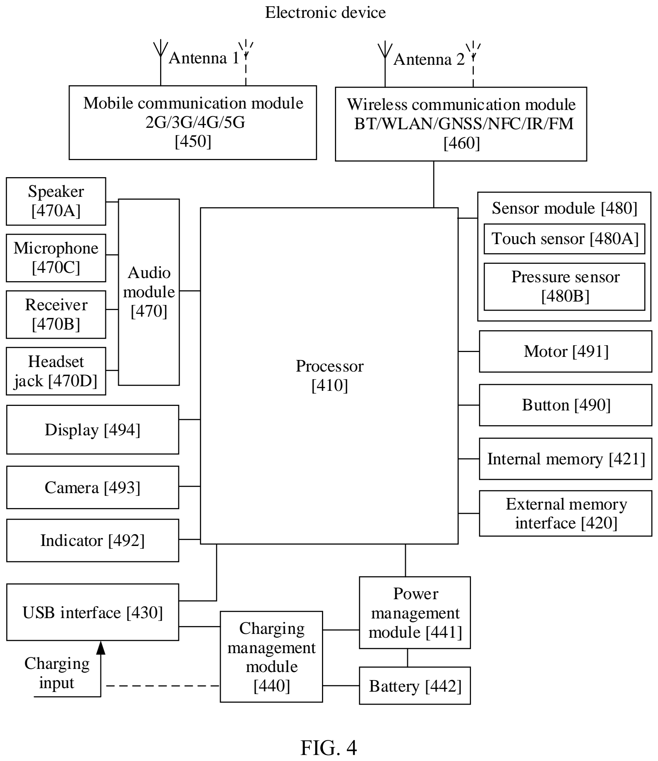

In an example, FIG. 4 is a diagram of a hardware structure of an electronic device according to an embodiment of this application.

As shown in FIG. 4, the electronic device may include a processor 410, a memory (including an external memory interface 420 and an internal memory 421), a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, and the like. The sensor module 480 may include a touch sensor 480A and a pressure sensor 480B. Optionally, the sensor module 480 may include a gyroscope sensor, a barometric pressure sensor, a magnetic sensor, an acceleration sensor, a distance sensor, an optical proximity sensor, a fingerprint sensor, a temperature sensor, an ambient light sensor, a bone conduction sensor, and the like.

It may be understood that the structure illustrated in this embodiment of the present invention does not constitute a specific limitation on the electronic device. In some other embodiments of this application, the electronic device may include more or fewer components than those shown in the figure, or a combination of some components, or splits from some components, or a different component layout. The components shown in the figure may be implemented by using hardware, software, or a group of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed on the processor 410, and is configured to store instructions and data. In some embodiments, the memory in the processor 410 is a cache memory. The memory may store an instruction or data that has just been used or is cyclically used by the processor 410. If the processor 410 needs to use the instructions or the data again, the processor 410 may directly invoke the instructions or the data from the memory. This avoids repeated access, reduces waiting time of the processor 410, and improves system efficiency.

In some embodiments, the processor 410 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 410 may include a plurality of groups of I2C buses. The processor 410 may be separately coupled to the touch sensor 480A, the microphone, the camera 493, and the like through different I2C bus interfaces. For example, the processor 410 may be coupled to the touch sensor 480A through the I2C interface, so that the processor 410 communicates with the touch sensor 480A through the I2C bus interface, to implement a touch function of the electronic device.

In embodiments of this application, the processor 410 may obtain, through the I2C bus interface, a touch operation that is detected by the touch sensor 480A and that is performed by a user on an interface, like a tap (such as a single-tap or a double-tap) operation, a slide operation, a touch and hold operation, or a drag operation, to determine a specific intention corresponding to the touch operation, and respond to the touch operation.

The charging management module 440 is configured to receive a charging input from a charger. The power management module 441 is configured to connect the battery 442 and the charging management module 440 to the processor 410. The power management module 441 receives an input from the battery 442 and/or the charging management module 440, and supplies power to the processor 410, the internal memory 421, the display 494, the camera component 493, the wireless communication module 460, and the like.

A wireless communication function of the electronic device may be implemented by using the antenna 1, the antenna 2, the mobile communication module 450, the wireless communication module 460, the modem processor, the baseband processor, and the like.

The antenna 1 and the antenna 2 are configured to transmit and receive electromagnetic wave signals. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 450 may provide a wireless communication solution that is applied to the electronic device and that includes 2G/3G/4G/5G. The mobile communication module 450 may include at least one filter, a switch, a power amplifier, a low noise amplifier (low noise amplifier, LNA), and the like. The mobile communication module 450 may receive an electromagnetic wave through the antenna 1, perform processing such as filtering or amplification on the received electromagnetic wave, and transmit the electromagnetic wave to the modem processor for demodulation. The mobile communication module 450 may further amplify a signal modulated by the modem processor, and convert the signal into an electromagnetic wave for radiation through the antenna 1. In some embodiments, at least some functional modules in the mobile communication module 450 may be disposed on the processor 410. In some embodiments, at least some functional modules of the mobile communication module 450 may be disposed in a same device as at least some modules of the processor 410.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through the audio device (not limited to the speaker 470A and receiver 470B), or displays an image or video through the display 494. In some embodiments, the modem processor may be an independent component. In some other embodiments, the modem processor may be independent of the processor 410, and is disposed in a same device as the mobile communication module 450 or another functional module.

The wireless communication module 460 may provide a wireless communication solution that is applied to the electronic device and that includes a wireless local area network (wireless local area network, WLAN) (for example, a Wi-Fi network), Bluetooth BT, a global navigation satellite system (global navigation satellite system, GNSS), frequency modulation (frequency modulation, FM), a near field communication (near field communication, NFC) technology, an infrared (infrared, IR) technology, or the like. The wireless communication module 460 may be one or more components integrating at least one communication processing module. The wireless communication module 460 receives an electromagnetic wave through the antenna 2, performs frequency modulation and filtering processing on an electromagnetic wave signal, and sends a processed signal to the processor 410. The wireless communication module 460 may further receive a to-be-transmitted signal from the processor 410, perform frequency modulation and amplification on the signal, and convert the signal into an electromagnetic wave for radiation through the antenna 2.

In some embodiments, the antenna 1 of the electronic device is coupled to the mobile communication module 450, and the antenna 2 is coupled to the wireless communication module 460, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In some embodiments of this application, the electrotonic device may exchange information with the electrotonic device based on a wireless communication technology through the wireless communication module 460, for example, receive projection data, send a user input event received by the electrotonic device, and receive an instruction for responding to a user operation.

The electronic device may implement a display function through the GPU, the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute program instructions to generate or change display information.

In embodiments of this application, the electrotonic device may draw and render layers on a content interface of an application through the GPU. In addition, the electronic device may draw and render content (for example, a line or a pattern drawn by the user, or a text written by the user) on a system-level transparent layer through the GPU.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 494, where N is a positive integer greater than 1.

In embodiments of this application, the electronic device may display, through the display 494, information such as a content interface, a line or a pattern drawn by the user, and a text written by the user.

The electronic device may implement a photographing function through the ISP, the camera component 493, the video codec, the GPU, the display 494, the application processor, and the like.

The external memory interface 420 may be used to connect to an external memory card, for example, a micro SD card, to extend a storage capability of the electronic device. The external memory card communicates with the processor 410 through the external memory interface 420, to implement a data storage function.

The internal memory 421 may be configured to store computer executable program code. For example, a computer program may include an operating system program and an application. The operating system may include but is not limited to operating systems such as Symbian® (Symbian®), Android® (Android®), Microsoft® Windows®, Apple iOS®, Blackberry® (Blackberry®), and Harmony® (Harmony®) OS. The executable program code includes instructions. The processor 410 runs the instructions stored in the internal memory 421, to perform various function applications of the electronic device and data processing. The internal memory 421 may include a program storage area and a data storage area. The program storage area may store an operating system, an application required by at least one function, and the like. The data storage area may store data (for example, user operation information, an input event, and a drawn layer) created when the electronic device is used, and the like. In addition, the internal memory 421 may include a high-speed random access memory, and may further include a nonvolatile memory, such as at least one magnetic disk storage component, a flash memory component, and a universal flash storage (universal flash storage, UFS). The processor 410 performs various function applications of the electronic device and data processing by running the instructions stored in the internal memory 421 and/or instructions stored in the memory disposed in the processor.

The electronic device may implement an audio function such as music playing or recording through the audio module 470, the speaker 470A, the receiver 470B, the microphone 470C, the application processor, and the like. For specific working principles and functions of the audio module 470, the speaker 470A, the receiver 470B, and the microphone 470C, refer to descriptions in the conventional technology.

The touch sensor 480A is also referred to as a "touch panel". The touch sensor 480A may be disposed on the display 494, and the touch sensor 480A and the display 494 form a touchscreen, which is also referred to as a "touch screen". The touch sensor 480A is configured to detect a touch operation performed on or near the touch sensor 480A. The touch sensor may transfer, to the processor, collected original information that indicates a touch location, touch strength, a touch angle, a touch size, and touch duration, so that the processor performs subsequent operation information obtaining, input event generation, and a subsequent processing process. In addition, the processor may provide, through the display 494, a visual output related to the touch operation. In some other embodiments, the touch sensor 480A may also be disposed on a surface of the electronic device at a location different from that of the display 494.

The pressure sensor 480B is configured to sense a pressure signal, and can convert the pressure signal into an electrical signal. In some embodiments, the pressure sensor 480B may be disposed on the display 494. There are a plurality of types of pressure sensors, such as a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The electronic device determines pressure intensity based on a capacitance change. When a touch operation is performed on the display 494, the electronic device detects touch strength of the touch operation through the pressure sensor. The electronic device may also calculate a touch location based on a detection signal of the pressure sensor 480B. In some embodiments, the pressure sensor 480B may be configured to detect information such as a touch location, touch strength, a touch angle, a touch size, and touch duration of a stylus.

In embodiments of this application, the touch operation detected by the touch sensor 480A may be an operation performed by the user on the touchscreen by using a finger, or may be an operation performed by the user on the touchscreen by using a touch auxiliary tool like a stylus, a touch stylus, or a touch ball. This is not limited in this application.

In addition, for descriptions of hardware such as the button 490, the motor 491, and the indicator 492, refer to the conventional technology. Details are not described again in embodiments of this application.

It may be understood that the structure illustrated in FIG. 4 in this application does not constitute a specific limitation on the electronic device. In some other embodiments of this application, the electronic device may include more or fewer components than those shown in the figure, or a combination of some components, or splits from some components, or a different component layout. The components shown in the figure may be implemented by using hardware, software, or a group of software and hardware.

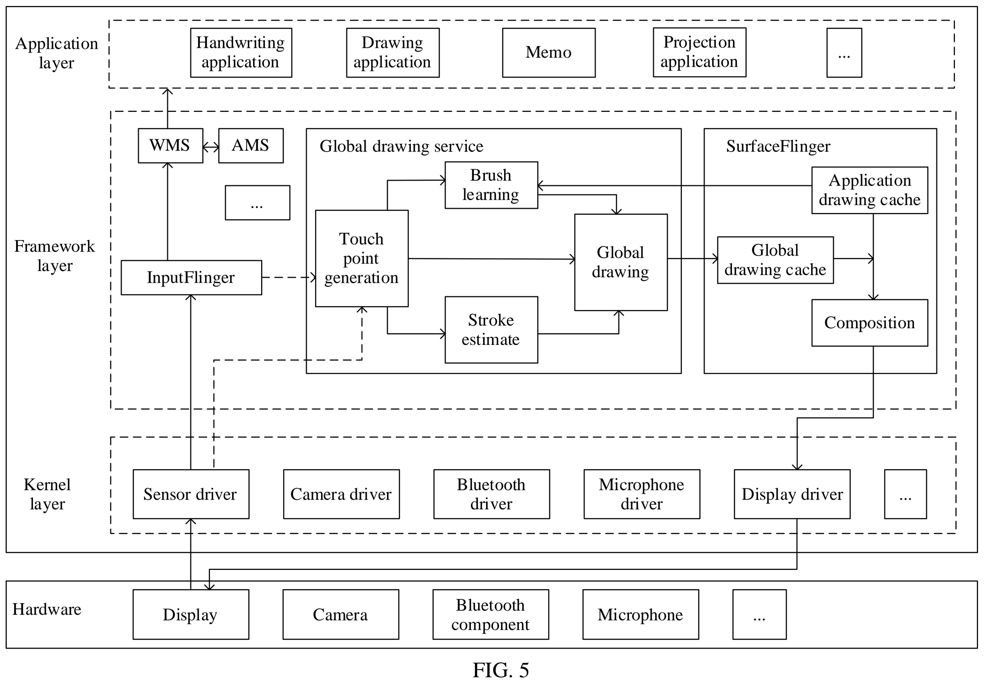

In a possible example, FIG. 5 is a diagram of a software structure of an electronic device according to an embodiment of this application. As shown in FIG. 5, an operating system of the electronic device may include an application layer, a framework (framework, FWK) layer, and a kernel layer.

The application layer may include a series of applications, for example, a handwriting application, a drawing application, a memo, and a projection application shown in FIG. 5. Certainly, the application at the application layer may include but is not limited to another application such as a word processing system (word processing system, WPS), Email, Camera, Gallery, Calendar, Phone, Maps, Navigation, Bluetooth, Music, Videos, and Messages. For ease of description, an application program is briefly described as an application below. The application may be a native application (for example, an application integrated in the operating system) or function, or may be a third-party application (for example, an application downloaded and installed by the user from an application store). This is not limited in embodiments of this application.

The framework layer provides an application programming interface (application programming interface, API) and a programming framework for an application at the application layer. As shown in FIG. 5, the framework layer may provide a window manager service (WindowManagerService, WMS), an activity manager service (activity management service, AMS), an input flinger (InputFlinger) service, a global drawing service, and a surface flinger (SurfaceFlinger) service.

The window manager service is used to provide window management, for example, creating a window, starting a window, deleting a window, moving a window, and managing a location/size/style of a window.

In embodiments of this application, the window manager service may further be used to manage window information. The window information may include but is not limited to information such as a window identifier, an identifier of an interface displayed in a window, and a virtual screen object corresponding to a window. For example, the virtual screen object corresponding to the window is a displayId of a virtual screen on which the window is located. For example, the displayId may be a parameter of an int type.

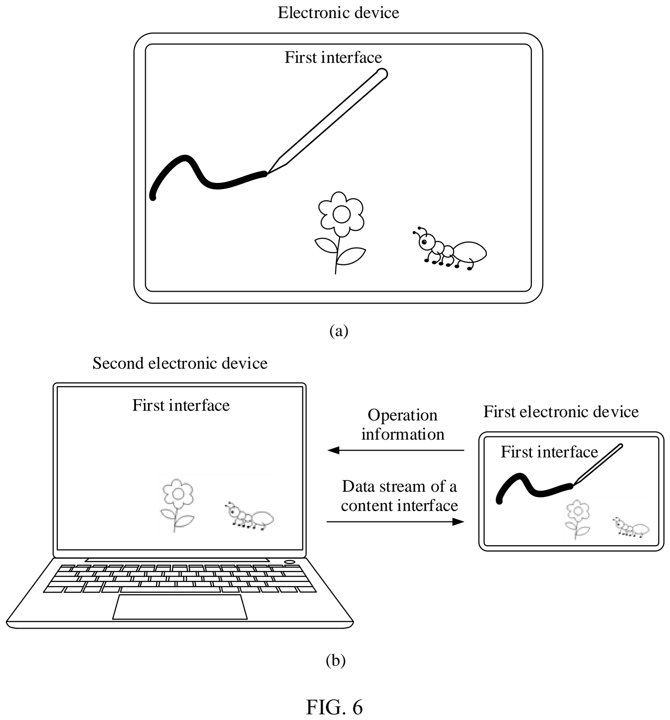

In a single-device scenario (a scenario shown in (a) in FIG. 6), the window manager service of the electronic device may be used to manage window information of all windows on the electronic device and corresponding virtual screen objects.

In a multi-device scenario (a scenario shown in (b) in FIG. 6), the window manager service of the electronic device is used to manage window information and corresponding displayIds of all windows on the electronic device, and window information and corresponding displayIds of all windows on another device that collaborates with the electronic device.

The activity manager service is responsible for managing an activity, and is responsible for work such as starting, switching, and scheduling of each component in a system, and management and scheduling of applications. Specifically, data classes used to store a process (Process), an activity (Activity), and a task (Task) are defined in the AMS. The data class corresponding to the process (Process) may include process file information, memory status information of the process, an activity, a service, and the like included in the process. Information about an activity can be saved in a task stack (ActivityStack). The ActivityStack is used to schedule activities of an application in a unified manner. The Activity-Stack may specifically store information about all running activities. The ActivityStack can also store information about historical activities.

In embodiments of this application, the AMS of the electronic device may schedule, based on an indication of the WMS, the activity corresponding to the target window to respond to the input event of the user.

The input flinger service is used to collect and process user operation information and distribute an input event. The input flinger service may include the following two classes: InputReader and InputDispatcher. The InputReader is used to convert user operation information into a specific input event, and the InputDispatcher is used to distribute a subsequent input event. For example, the InputDispatcher may send the input event to a WMS through a dedicated channel between the WMS and the InputDispatcher. After receiving the input event, the WMS may distribute the input event to an activity (Activity) corresponding to a target window in the AMS. Then, the activity may respond to the input event.

In some embodiments of this application, after the input flinger service converts the user operation information into the specific input event, the input flinger service may further provide the input event to the global drawing service while distributing the input event, so that the global drawing service performs subsequent stroke estimate, writing stroke drawing and rendering, global layer sending for display, and the like. The global drawing service may be used to provide functions such as touch point generation, stroke estimate, and writing stroke drawing and rendering. For example, the global drawing service may obtain the user operation information from a sensor driver, or the global drawing service may obtain the input event from the input flinger service, and obtain a touch point after related processing. In addition, the global drawing service may perform, based on a stroke estimate mechanism, subsequent stroke estimate based on actual consecutive touch points, for example, predict possible touch points in a future time period (for example, 2 seconds) or predict a preset quantity (for example, 5) of possible touch points in the future. In this way, the electronic device can perform drawing and rendering in advance based on the predicted point. The global drawing service may be used to temporarily store global drawing in a global drawing buffer (Buffer) after the global drawing is performed based on the predicted point, so that the surface flinger service can perform subsequent composition.

In some embodiments, as shown in FIG. 5, the global drawing service may be further used to provide a brush learning function, and provide a function of obtaining a writing stroke of a corresponding display style by drawing based on a learned brush mode in a global drawing process. For example, the global drawing service may learn a brush mode used by an application when drawing a writing stroke, for example, learn a brush mode that is at an application layer and that is obtained by the application through drawing and that is stored in an application drawing cache, for example, a brush type (for example, a pen, a pencil, a marker, a watercolor pen, or an oil paint pen), a line color (for example, black, red, green, blue, or purple), a line width, a line texture (for example, no texture, ripple, marble, wood grain, or gravel), and the like, and draw a corresponding writing stroke based on the learned brush mode. Based on this, the writing stroke is drawn and displayed in the brush mode consistent with that of the application, so that consistent visual experience can be brought to the user, and the user does not perceive that the writing stroke is drawn at a global layer.

It should be noted that the application layer stored in the application drawing cache shown in FIG. 5 is obtained by the application through drawing. For example, the electronic device may store, in the application drawing cache, an application layer obtained through touch bottom-layer processing, input event processing, drawing, rendering, and composition shown in FIG. 2.

The surface flinger service is used to compose graphic display data from a plurality of sources. For example, it is assumed that the application layer corresponding to the content interface includes four layers: a status bar, a navigation bar, a wallpaper, and an initiator icon. Drawing and rendering of the status bar, the navigation bar, the wallpaper, and the initiator icon are separately performed. The surface flinger service is mainly used to obtain, from the buffer (such as the application drawing cache), graphics display data corresponding to the status bar, the navigation bar, the wallpaper, and the initiator icon layer, compose the graphics display data, and send the graphics display data for display.

In embodiments of this application, when performing surface composition, the surface flinger service further obtains, from a buffer (for example, a global drawing buffer), graphics display data corresponding to a global layer at which a writing stroke is drawn, composes the graphics display data and the graphics display data corresponding to the application layer in the application drawing cache, and then sends the graphics display data for display. Finally, the user can see the content interface of the application and information such as a line, a pattern, and a text that are handwritten by the user.

Certainly, the framework layer may be further used to provide another management service, like a package manager service, a content provider service, a phone manager service, a resource manager service, a notification manager service, a location manager service, and a view system (view system). The package manager service may be used to manage a program in a system. The content provider service is used to support one application in accessing data of another application (for example, a contact database), or sharing data of the application with another application. The data may include a video, an image, audio, calls that are made and received, a browsing history, a bookmark, a phone book, and the like. The phone manager service may be used to provide an obtaining method for accessing a status and information related to communication of a terminal device, and provide a communication function of the terminal device, for example, call status management (including answering, declining, and the like). The resource manager service may be used to provide access to a non-code resource, for example, access to a local character string, an icon, an image, a graph, a video file, or a layout file (Layoutfile). The notification manager service is used to provide a function of displaying customized prompt information in a status bar. The prompt information may be used to convey a notification message, and may automatically disappear after a short pause without requiring a user interaction. The location manager service is used to provide a service related to processing of a geographical location. The view system (view system) may be configured to construct a display interface of an application. The view system includes a visual control, such as a text box (TextBox) control, a list (List) control, a grid (Grid) control, a button (Button) control, and a web browser control that can be embedded.

The kernel layer is a layer between hardware and software. The kernel layer may include a camera driver, a keyboard driver, a display driver, a microphone driver, a headset driver, a sensor driver, a Bluetooth driver, and the like.

In embodiments of this application, when the user performs a handwriting operation in a touchscreen area corresponding to the content interface, the sensor driver may obtain operation information that is of the user and that is detected by a sensor (for example, a touch sensor and/or a pressure sensor) disposed on the touchscreen, and then provide the operation information to the input flinger service and the global drawing service.

For example, in some embodiments of this application, the input operation received by the electronic device may include but is not limited to a tapping (for example, a single tap or a double tap) operation, a press and hold operation, a sliding operation, a drag operation, a floating gesture operation, or the like performed by the user on the touchscreen by using a finger or a touch auxiliary tool like a stylus, a touch stylus, or a touch ball. This is not specifically limited in embodiments of this application.

It should be noted that FIG. 5 is merely an example of the diagram of the software structure of the electronic device, and merely layers and software modules related to the solutions of this application are simply enumerated. During actual application, the operating system of the electronic device may further include another layer, and each layer may further include another software module configured to realize one or more functions or services. This is not specifically limited in embodiments of this application. In addition, a specific level at which each software module is located is not limited in embodiments of this application. For example, the global drawing service may alternatively be located at a system library or another layer.

It should be noted that, in the method for displaying handwritten content in embodiments of this application, a source of a content interface on which a user performs handwriting is not specifically limited. For example, the content interface on which the user performs handwriting may be an interface (for example, a first interface shown in (a) in FIG. 6) of an application installed on the electronic device in the single-device scenario shown in (a) in FIG. 6. Alternatively, the content interface on which the user performs handwriting may be a content interface projected by a second electronic device onto a first electronic device or an extended interface (the first interface shown in (b) in FIG. 6) of the second electronic device in the multi-device scenario shown in (b) in FIG. 6. In the multi-device scenario shown in (b) in FIG. 6, the first electronic device may display a corresponding content interface (namely, the first interface) based on a data stream of the content interface from the second electronic device, and send, to the second electronic device, operation information of an operation performed by the user on the content interface, so that the second electronic device performs a corresponding interface response. In addition, in the method for displaying handwritten content in embodiments of this application, a specific type of a content interface for handwriting and content displayed on the content interface are not specifically limited.

The following describes in detail the method for displaying handwritten content provided in embodiments of this application with reference to the accompanying drawings.

In embodiments of this application, an electronic device may receive content written by a user. For example, the user may handwrite content on a touchscreen of the electronic device by using a stylus. For another example, the user may handwrite content on a touchscreen of the electronic device by using a finger. In the following embodiments of this application, an example in which the user performs input by using a stylus is used for description.

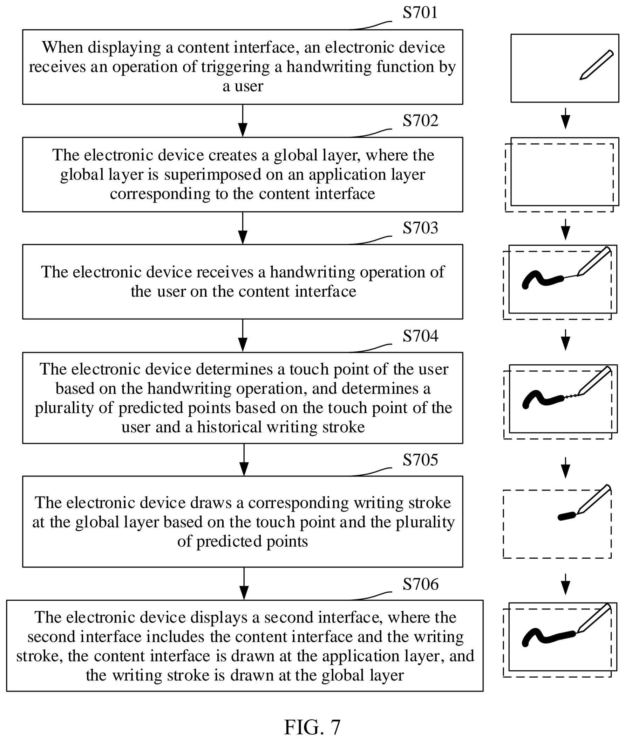

With reference to FIG. 7, FIG. 7 is a flowchart of a method for displaying handwritten content according to an embodiment of this application. As shown in FIG. 7, the method for displaying handwritten content provided in this embodiment of this application may include S701 to S706.

S701: When displaying a content interface, an electronic device receives an operation of triggering a handwriting function by a user.

The content interface displayed by the electronic device may be any interface of an application or an applet that supports handwriting of the user, for example, an application interface or an applet interface that is installed on the electronic device and started on the electronic device shown in (a) in FIG. 6, or an interface projected by another electronic device onto the electronic device or an interface extended from another electronic device to the electronic device shown in (b) in FIG. 6.

For example, the operation of triggering the handwriting function by the user is an operation of connecting a touch auxiliary tool like a stylus, a touch stylus, or a touch ball to the electronic device by the user, or an operation of moving a touch auxiliary tool like a stylus, a touch stylus, or a touch ball close to a touchscreen of the electronic device by the user.

Alternatively, the operation of triggering the handwriting function by the user may include but is not limited to an operation of enabling the handwriting function by the user (for example, an operation of tapping a related button or a function option by the user), an operation of selecting a pen style of a virtual stylus by the user, an operation of selecting an annotation style by the user, an operation of starting handwriting by the user on the content interface, or the like. An operation of triggering the handwriting function by the user is not specifically limited in this embodiment of this application. The pen style of the virtual stylus may include but is not limited to a virtual pencil, a virtual pen, a virtual ball-point pen, a virtual marker, or the like. The annotation style may include but is not limited to highlighting, line drawing, deletion, circling, graphic marking, textual annotation, or the like.

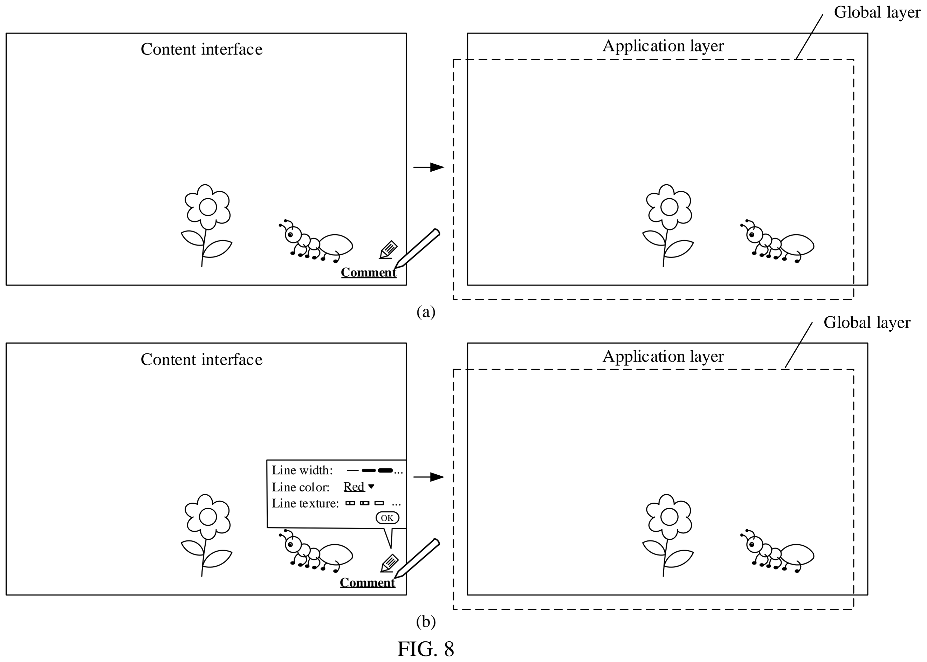

With reference to FIG. 8, FIG. 8 is a diagram of two operations for triggering a handwriting function according to an embodiment of this application. The operation of triggering the handwriting function by the user may be an operation of tapping an "Annotate" function button on the content interface by the user shown in (a) in FIG. 8, or an operation of tapping an "OK" function option after the user selects an option like a line width, a line color, or a line texture shown in (b) in FIG. 8.

Certainly, FIG. 8 is merely used as an example of two operation interfaces for triggering the handwriting function. An interface used to set a brush mode may further include another option related to the brush mode, for example, one or more options such as a line type (for example, a solid line, a dashed line, or a dotted line), a line style (for example, a straight line or a curve), a pen style (for example, a pencil, a pen, a ball-point pen, or a marker), and an annotation style (for example, image drawing, highlighting, line drawing, deletion, circling, graphic marking, or textual annotation).

In addition, FIG. 8 is merely used as an example of two operations for triggering the handwriting function. A specific trigger operation is not limited in this embodiment of this application. For example, the operation of triggering the handwriting function may alternatively be an operation of starting sliding by the user in a touchscreen area corresponding to the content interface. For another example, the operation of triggering the handwriting function may alternatively be a preset sliding gesture (for example, a "straight-line" sliding gesture, a three-finger sliding gesture, a touch-and-hold gesture in a blank area, a double-tap gesture in a blank area, or a gesture of sliding inward from an edge of the touchscreen) operation performed by the user on the content interface, a voice instruction of the user, or a facial expression instruction of the user.

S702: The electronic device creates a global layer, where the global layer is superimposed on an application layer corresponding to the content interface.

For example, after receiving the operation of triggering the handwriting function by the user, the electronic device may start a global drawing service. After the global drawing service is started, a corresponding global layer is created. The global drawing service is a system-level service of the electronic device, and the global drawing service may be used to provide system-level functions such as touch point generation, stroke estimate, and writing stroke drawing and rendering. The global layer is mainly used to draw a writing stroke of the user, so that a global layer including an actual writing stroke and a predicted writing stroke is obtained. Content drawn at the global layer may be superimposed on a corresponding location on the content interface.

The global layer is usually a transparent layer. Because the global layer is only used to assist the user in drawing a writing stroke, the writing stroke drawn at the global layer superimposed on the content interface of the electronic device does not affect normal browsing of the user. Certainly, transparency of the global layer is not limited in this application. For example, the global layer may alternatively be a partially transparent layer like 80% transparent layer or 50% transparent layer.

In addition, although the global layer is superimposed on the application layer corresponding to the content interface, application response logic that is of an application or an applet corresponding to the application layer located at a lower layer and that is for an operation performed by the user on the content interface is not changed. In other words, running of the global drawing service does not affect reporting of an input event of the user to the application layer, and does not affect a normal response of the application layer. Therefore, the writing stroke drawn at the global layer superimposed on the content interface of the electronic device may not affect a normal operation of the user on the content interface.

For example, the global layer superimposed on the application layer of the electronic device may be shown in (a) in FIG. 8 and (b) in FIG. 8. It should be noted that the global layer and the application layer shown in (a) in FIG. 8 and (b) in FIG. 8 are staggered in terms of a location relationship to facilitate distinguishing between the global layer and the application layer. Actually, edges of the global layer completely overlap edges of the application layer and are superimposed on the application layer.

S703: The electronic device receives a handwriting operation of the user on the content interface.

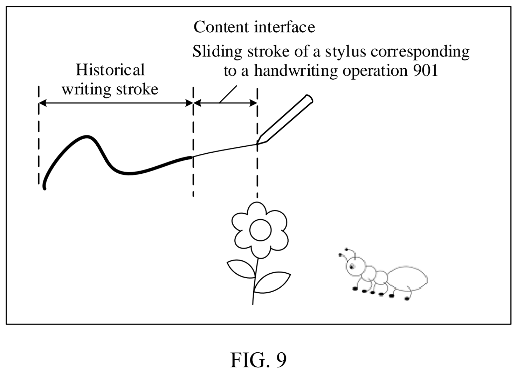

The handwriting operation of the user on the content interface may include but is not limited to an operation performed by the user by using a finger or a touch auxiliary tool like a stylus, a touch stylus, or a touch ball in the touchscreen area corresponding to the content interface, for example, line drawing, writing, circling, and marking. For example, the handwriting operation of the user on the content interface is shown as an operation 901 in FIG. 9.

In an example, when the user performs a handwriting operation in the touchscreen area corresponding to the content interface, the electronic device may detect the touch operation of the user based on a sensor (for example, a touch sensor and/or a pressure sensor) disposed on the touchscreen, to obtain operation information of the user by processing collected original data corresponding to the touch operation based on a preset processing algorithm.

After obtaining the operation information of the user, the electronic device may convert the operation information into a specific input event based on conventional processing logic, and then distribute the input event to a corresponding application activity. In addition, the electronic device may provide the operation information to the global drawing service, so that the global drawing service determines a touch point, and performs subsequent stroke estimate, writing stroke drawing and rendering, global layer sending for display, and the like.

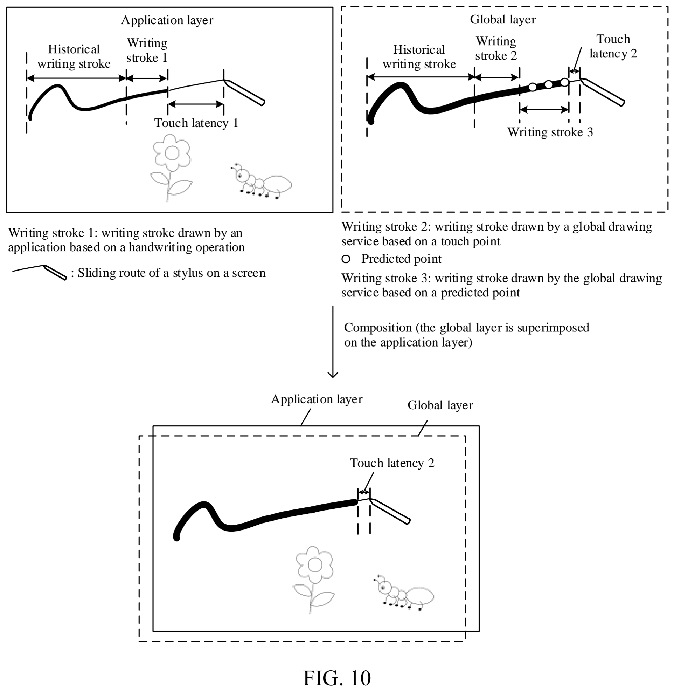

In some embodiments of this application, after the application activity obtains the input event for the application activity, the application activity may perform, based on a conventional application response mechanism, drawing, rendering, and composition of a corresponding writing stroke such as a graph/text based on information such as a touch location, touch strength, a touch angle, and a touch size that are indicated by the input event, and send the obtained writing stroke and the application layer of the content interface for display. For example, the writing stroke drawn and rendered by the application based on the handwriting operation and finally displayed on the content interface may be shown as a writing stroke 1 in FIG. 10.

Certainly, in this embodiment of this application, whether the electronic device distributes the input event corresponding to the handwriting operation of the user to the corresponding application is not limited, and whether the application performs subsequent writing stroke drawing is not limited. In some embodiments, the electronic device may alternatively provide only related information of the input event to the global drawing service, and the global drawing service is responsible for subsequent processes such as stroke estimate, writing stroke drawing and rendering, global layer sending for display, and the like.

After the global drawing service obtains the operation information or the related information of the input event, the global drawing service may continue to perform the following S704 based on the operation information or the related information of the input event.

S704: The electronic device determines a touch point of the user based on the handwriting operation, and determines a plurality of predicted points based on the touch point of the user and a historical writing stroke.

For example, the global drawing service of the electronic device may determine the touch point of the user based on information such as a touch location, touch strength, a touch angle, and a touch size that correspond to the obtained handwriting operation, predict a sliding rule of the stylus based on the stroke estimate mechanism, the touch point of the user, and the historical writing stroke, and then determine the plurality of predicted points, so that the electronic device can perform drawing and rendering in advance based on the predicted points, to improve a touch latency of display.

The touch point of the user indicates one or more of a location of a drawn point, a depth of the drawn point, a width of a drawn line, and the like that correspond to the handwriting operation of the user. For example, the electronic device may determine the location of the drawn point based on the touch position corresponding to the handwriting operation, determine the depth of the drawn point based on the touch force corresponding to the handwriting operation, and determine the width of the drawn line based on the touch angle and/or the touch size corresponding to the handwriting operation. The historical writing stroke is drawn by the global drawing service of the electronic device based on a historical handwriting operation of the user within a preset historical time period. For example, the historical writing stroke may be shown in FIG. 9 or FIG. 10. The predicted point indicates one or more of a location of a predicted drawn point, a depth of the predicted drawn point, a width of a predicted drawn line, and the like.

In an example, when performing stroke estimate, the global drawing service of the electronic device may predict, based on the sliding rule of the stylus, for example, a possible touch point of the stylus in a future preset time period (for example, 2 seconds) or a preset quantity (for example, 5) of possible touch points of the stylus in the future. For example, for the predicted point, refer to an example of the predicted point in FIG. 10. For a specific process and algorithm of the stroke estimate mechanism, refer to a conventional stroke estimate algorithm (for example, a Gaussian distribution algorithm) in the conventional technology. This is not limited in embodiments of this application.

S705: The electronic device draws a corresponding writing stroke at the global layer based on the touch point and the plurality of predicted points.

For example, the global drawing service of the electronic device may draw a writing stroke of a corresponding depth and a corresponding width at a corresponding location at the global layer based on information such as locations corresponding to the touch point and the plurality of predicted points, the width of the drawn line, and the depth and the width of the drawn point.

For example, when the operation 901 shown in FIG. 9 is received, the writing stroke drawn by the global drawing service at the global layer based on the touch point and the plurality of predicted points may be shown as a writing stroke 2 and a writing stroke 3 in FIG. 10. The writing stroke 2 is a writing stroke drawn by the global drawing service based on the touch point, and the writing stroke 3 is a writing stroke drawn by the global drawing service based on the predicted points.

S706: The electronic device displays a second interface, where the second interface includes the content interface and the writing stroke, the content interface is drawn at the application layer, and the writing stroke is drawn at the global layer.

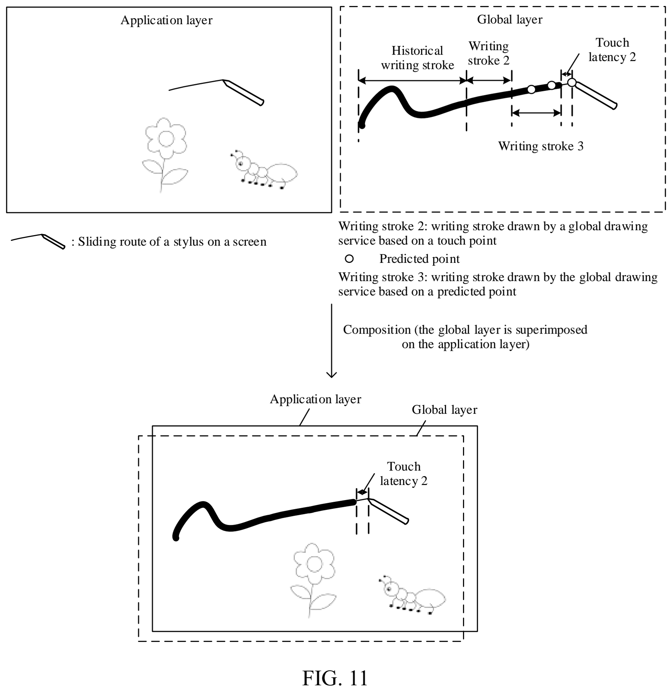

It may be understood that, when the global drawing service draws a writing stroke and the application does not draw a corresponding writing stroke, as shown in FIG. 11, the global drawing service draws a writing stroke (for example, the writing stroke 2 shown in FIG. 11) based on the touch point corresponding to the handwriting operation, and further draws a writing stroke (for example, the writing stroke 3 shown in FIG. 11) based on the predicted points. The writing stroke is drawn in advance based on the predicted points, so that a display latency (for example, a touch latency 2 shown in FIG. 11) of the global layer is very small, and a touch latency effect of the writing stroke that is finally drawn at the global layer and that is finally sent for display is good. The global layer is a special attribute of the transparent layer. Writing strokes (for example, the historical writing stroke, the writing stroke 2, and the writing stroke 3 in FIG. 11) actually seen by the user are superimposed on the content interface. Therefore, from a perspective of a visual effect of the user, the writing stroke is like writing directly on the content interface, so that visual experience of the user is good.

When both the global drawing service and the application draw writing strokes, as shown in FIG. 10, when the application draws a writing stroke, the application draws a writing stroke corresponding to an actual sliding stroke of the stylus at the application layer based on the information corresponding to the handwriting operation. When the application draws a writing stroke based on the handwriting operation, touch bottom-layer processing, input event processing, drawing, rendering, and composition similar to those shown in FIG. 2 need to be performed, and the foregoing processes all need to consume long time. Therefore, when the application completes drawing the writing stroke for the operation 901, the stylus has slid to a far location. Therefore, as shown in FIG. 10, a display latency (a touch latency 1 shown in FIG. 10) of the application layer drawn by the application is large. In comparison with the application layer drawn by the application, as shown in FIG. 10, the global drawing service draws a writing stroke (for example, the writing stroke 2 shown in FIG. 10) based on the touch point corresponding to the handwriting operation, and draws a writing stroke (for example, the writing stroke 3 shown in FIG. 10) based on the predicted points. The writing stroke is drawn in advance based on the predicted points, so that the writing stroke at the global layer is closer to a real-time location of the stylus than the writing stroke at the application layer, and a display latency (a touch latency 2 shown in FIG. 10) is smaller. The global layer is a special attribute of the transparent layer. A writing stroke actually seen by the user is an effect of superimposing the writing stroke (for example, the writing stroke 2 and the writing stroke 3 in FIG. 10) drawn at the global layer and the writing stroke (for example, the writing stroke 1 in FIG. 10) drawn at the application layer, so that the writing stroke finally drawn at the global layer after being sent for display can compensate for a problem of a large touch latency of the writing stroke drawn at the application layer. In addition, from a perspective of a visual effect of the user, the writing stroke is like writing directly on the content interface, so that visual experience of the user is good.

It should be noted that, in the foregoing example, the historical writing stroke is always drawn at the global layer in the handwriting operation process of the user. However, whether all writing strokes are drawn at the global layer is not limited in embodiments of this application. For example, when both the global drawing service and the application draw writing strokes, in some other examples, the electronic device may alternatively draw a new writing stroke while erasing a previous writing stroke from the global layer. For example, an erasing manner is, for example, fade-out erasing in descending order of time.

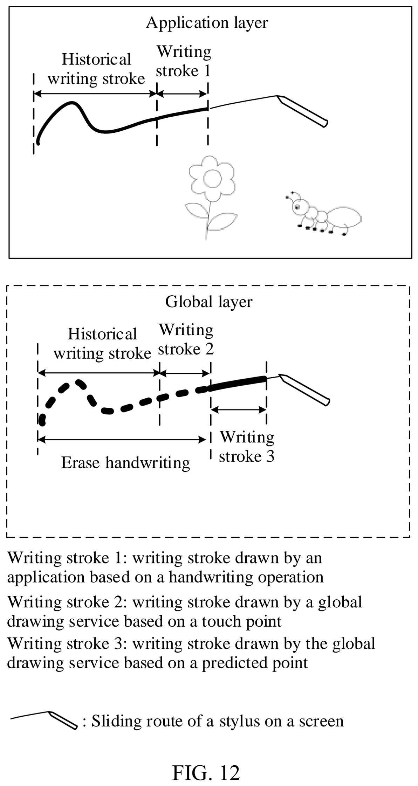

For example, as shown in FIG. 12, the electronic device may erase, from the global layer based on an actual situation in which the application draws the writing stroke at the application layer, the writing stroke 2 corresponding to the writing stroke 1 and the historical writing stroke that have been drawn at the application layer.

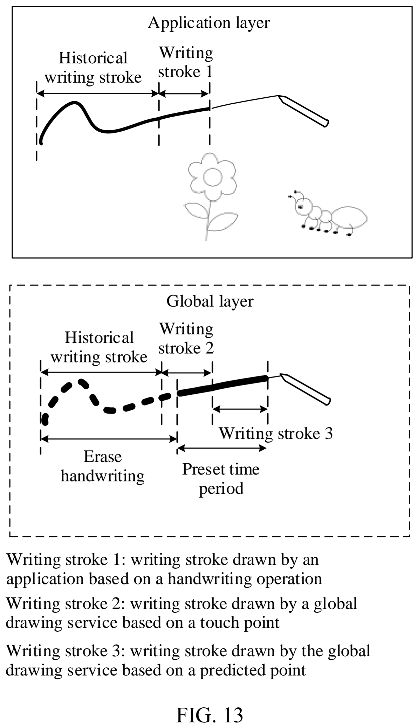

Alternatively, as shown in FIG. 13, the electronic device may erase a writing stroke drawn at the global layer before a preset time period (for example, 2 seconds ago).

Alternatively, as time goes by, a new writing stroke is continuously drawn on a side that is at the global layer and that is close to the stylus as a nib moves, and a historical writing stroke away from the nib disappears after being displayed for a period of time. After the user lifts the stylus for a period of time, the writing stroke at the global layer completely disappears.

In addition, when both the global drawing service and the application draw writing strokes, in some examples, after the user completes the handwriting operation, for example, when the finger of the user or the touch auxiliary tool leaves the touchscreen, the electronic device may gradually erase the historical writing stroke drawn at the global layer, and erase all writing strokes until the application completes all writing stroke drawing tasks of the handwriting operation. Alternatively, in some other examples, after the application completes all the writing stroke drawing tasks of the handwriting operation, the electronic device may erase the historical writing stroke drawn at the global layer.

It should be noted that, when the electronic device erases the previous writing stroke from the global layer while drawing the new writing stroke, because drawing of the corresponding writing stroke has been completed at the application layer, and the global layer is a transparent layer superimposed on the layer at which the content interface is located, from a perspective of a visual effect of the user, the user may see, through the global layer, the writing stroke corresponding to the erased writing stroke at the application layer. Therefore, erasing the previous writing stroke from the global layer does not affect normal viewing of writing strokes corresponding to all handwriting operations by the user. In addition, the foregoing solution of erasing the previous writing stroke from the global layer can further reduce complexity of subsequent drawing at the global layer, further improve drawing of the writing stroke at the global layer, and further improve a touch latency of writing stroke display.

It may be understood that, according to the method for displaying handwritten content provided in this embodiment of this application, when the user performs the handwriting operation, such as line drawing, writing, circling, and marking on the content interface, the electronic device may create the system-level transparent layer, for example, the global layer, that is independent of the layer at which the content interface is located and that is superimposed on the layer at which the content interface is located, perform stroke estimate based on the handwriting operation of the user and the historical writing stroke, and draw, based on the touch point corresponding to the handwriting operation of the user and the predicted points, the corresponding writing stroke at the global layer.

In the foregoing process, because the writing stroke drawn at the global layer includes the writing stroke drawn in advance based on the predicted points, a problem of high power consumption but limited touch latency improvement effect caused by a solution for increasing a display refresh rate and a solution for increasing a processing frequency in a conventional solution can be alleviated, or a problem of poor touch latency of writing stroke display caused by a solution for drawing a writing stroke based only on an actual sliding stroke of a stylus can be alleviated.

In addition, in the foregoing process, the writing stroke is only drawn at the global layer, and content of the drawing is simple. Therefore, time required in each step in the drawing process is further shortened. In particular, in comparison with a drawing process based on a vertical synchronization (vertical synchronization, VSYNC) signal dual-buffer mechanism in a conventional solution, because content of the writing stroke at the global layer is simple, and a drawing process takes short time, the drawing process and subsequent layer composition may be completed in one VSYNC period. The VSYNC signal is a signal that is sent by an operating system (for example, sent at an interval of 16 ms) and that is used to trigger interface drawing, interface rendering, interface composition, and sending for display. The VSYNC signal dual-buffer mechanism indicates that an image can be displayed to the user in a third VSYNC period after two VSYNC periods (each VSYNC period is used for drawing and rendering, and composition respectively). Therefore, the VSYNC signal dual-buffer mechanism increases the display delay of the writing stroke. However, in the solution provided in this application, a VSYNC signal dual-buffer mechanism does not need to be performed. As a result, in comparison with the conventional solution, a display delay of the writing stroke can be further reduced, and a touch latency of writing stroke display can be further improved. For specific descriptions of the VSYNC signal dual-buffer mechanism, refer to explanations and descriptions in the conventional technology. Details are not described in this application.

In addition, in the foregoing process, because the global layer created by the first electronic device is a system-level layer, a problem of a poor touch latency of displaying an interface can be resolved by using the system-level general solution without the need of performing development and upgrade, by each application developer, on an application of the application developer. In addition, regardless of which application the user inputs content on a content interface, a processing process, implementation details, and the like of the system-level general solution are consistent.

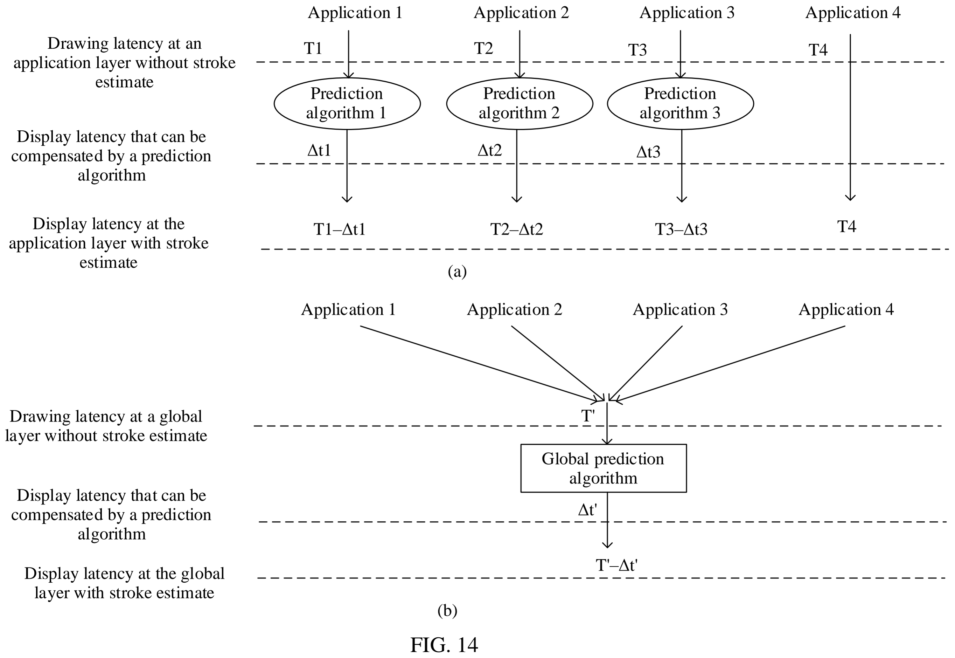

For example, if the conventional solution in which each application developer independently performs additional development and upgrade on an application of the application developer is used, implementation details, algorithm precision, or the like of a stroke estimate algorithm developed by each application developer may be different, and final touch latency effects of display perceived by the user are greatly different. For example, as shown in (a) in FIG. 14, it is assumed that a writing stroke is not drawn based on a stroke estimate mechanism, and display latencies of writing strokes corresponding to an application 1, an application 2, an application 3, and an application 4 are respectively T1, T2, T3, and T4. If stroke estimate algorithms (for example, a prediction algorithm 1, a prediction algorithm 2, and a prediction algorithm 3 shown in (a) in FIG. 14) developed for the application 1, the application 2, and the application 3 are separately used, display latencies of $\Delta t1$, $\Delta t2$, and $\Delta t3$ may be compensated for the application 1, the application 2, and the application 3 respectively, and final display latencies of writing strokes corresponding to the application 1, the application 2, and the application 3 are respectively T1-$\Delta t1$, T2-$\Delta t2$, and T3-$\Delta t3$. However, if the system-level general solution provided in embodiments of this application is used, as shown in (b) in FIG. 14, regardless of an application for which writing stroke drawing is performed, a latency of a drawing process at a global layer is T', and a latency of a global prediction algorithm is $\Delta t'$. Therefore, final display latencies of writing strokes of the application 1, the application 2, the application 3, and the application 4 are all T'-$\Delta t'$. Therefore, based on the system-level general solution provided in embodiments of this application, the user feels same touch latency performance and effect of display when using any application.

In addition, in the foregoing process, because the global layer is a transparent layer that is independent of the layer at which the content interface is located and that is superimposed on the layer at which the content interface is located, from a perspective of a visual effect of the user, the writing stroke seen by the user is like writing directly on the content interface, so that visual experience of the user is good.

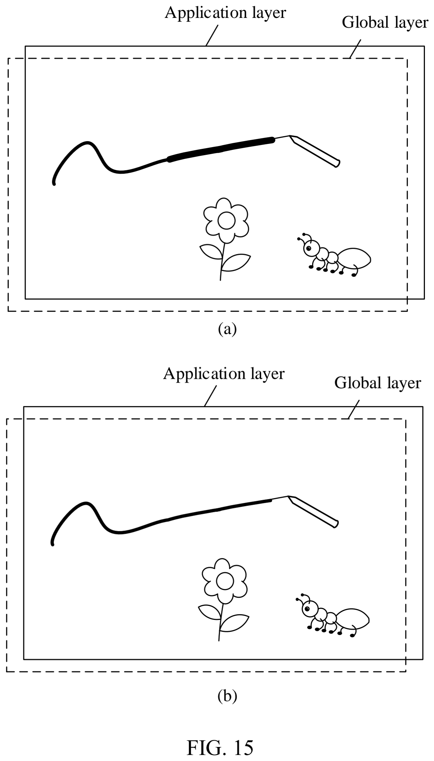

When both the global drawing service and the application draw writing strokes, in some embodiments, a brush mode used by the global drawing service when drawing the writing stroke at the global layer is usually a default brush mode of the global drawing service. A brush mode used by the application when drawing the writing stroke at the application layer is usually a default brush mode of the application or is set by the user based on an actual requirement in a brush mode setting option provided by the application. However, in some cases, the default brush mode of the global drawing service is different from the default brush mode of the application, and inconsistency between the two brush modes may result in poor visual experience of the user because the user may visually see a difference between the two brush modes as shown in (a) in FIG. 15 when the writing stroke at the global layer is superimposed and displayed on the writing stroke at the application layer.

Alternatively, when both the global drawing service and the application draw writing strokes, in some embodiments, a brush mode used by the global drawing service when drawing the writing stroke at the global layer is usually set by the user based on an actual requirement in a brush mode setting option provided by the global drawing service. A brush mode used by the application when drawing the writing stroke at the application layer is usually a default brush mode of the application or is set by the user based on an actual requirement in a brush mode setting option provided by the application. However, in some cases, if the user expects that the writing stroke can be displayed based on a brush mode preferred by the user, the user needs to set a same brush mode in the application and the global drawing service. This is complex for the user and causes poor user experience.

To resolve the foregoing problem and ensure consistency between the writing stroke at the global layer and the writing stroke at the application layer, in this embodiment of this application, the global drawing service may learn the brush mode of the application layer, to maintain consistency between a display effect of a writing stroke drawn at the global layer based on the learned brush mode and a writing stroke drawn at the application layer shown in (b) in FIG. 15.

The brush mode indicates any one or more of the following parameters: a brush type (for example, a pen, a pencil, a marker, a watercolor pen, or an oil paint pen), a line color (for example, black, red, green, blue, or purple), a line width, and a line texture (for example, no texture, ripple, marble, wood grain, or gravel).

In a possible implementation, the global drawing service may obtain the brush mode of the application based on a pattern recognition method, to learn the brush mode of the application. Obtaining the brush mode of the application based on the pattern recognition method mainly includes the following step 1 and step 2.

Step 1: Determine a newly added writing stroke (also referred to as a latest writing stroke) at the application layer.

In an example, the global drawing service may determine the newly added writing stroke at the application layer by comparing a current frame of image and a previous frame of image at the application layer.

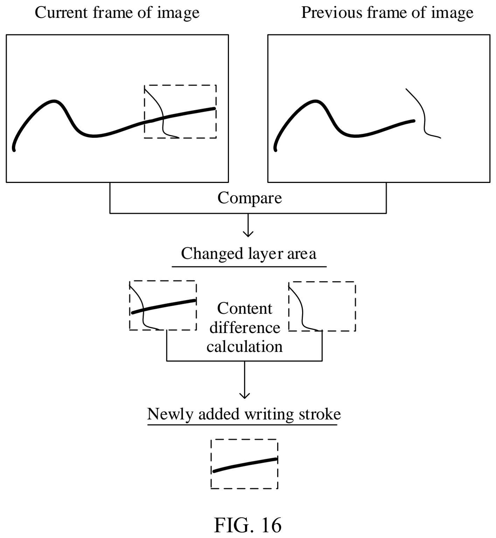

For example, as shown in FIG. 16, the global drawing service may first determine a changed layer area by comparing the current frame of image and the previous frame of image at the application layer, and then calculate a difference between content in the layer area of the current frame of image and content in the layer area of the previous frame of image, to determine the newly added writing stroke at the application layer. The changed layer area may be a layer area that includes changed content and that has a preset size, or may be a layer area that includes changed content and that has a smallest size. This is not specifically limited in this embodiment of this application. In some cases, to reduce a calculation amount, a layer area that includes changed content and that has a smallest size may be preferentially used as the changed layer area.

Step 2: Identify a brush mode of the newly added writing stroke.

For example, the global drawing service may perform image analysis on the identified newly added writing stroke, to obtain one or more of information such as a brush type, a line color, a line width, and a line texture that correspond to the newly added writing stroke.

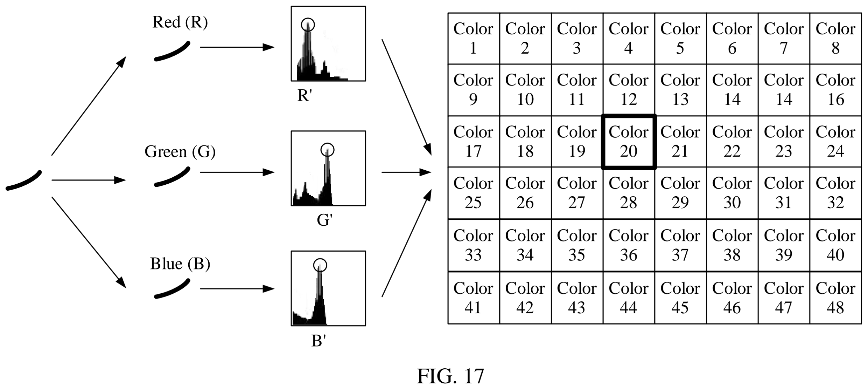

In an example, as shown in FIG. 17, the global drawing service may perform separation of three channels R (red), G (green), and B (blue) of the newly added writing stroke, and separately collect statistics on an extremum point (R', G', B') except 0 in a gray histogram of the R, G, and B channels. A color corresponding to (R', G', B') is the line color.

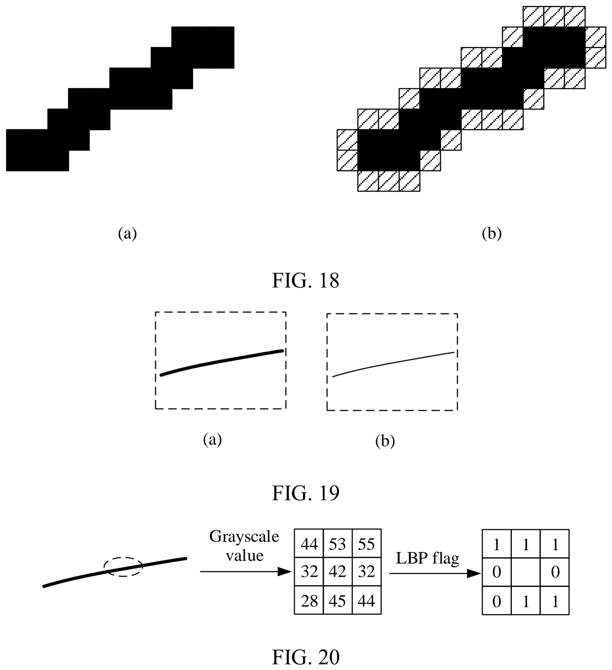

In an example, the global drawing service may perform binarization processing on the newly added writing stroke, and perform a closure operation on a writing stroke image obtained through the binarization processing, to remove an internal hole and an irregular handwriting edge, and obtain a quantity A1 of pixels in a connected area. For example, an original image obtained by performing binarization processing and a closure operation on the newly added writing stroke is shown in (a) in FIG. 18. Then, the global drawing service may perform an expansion operation on the original image to obtain an expanded image, and a quantity A2 of pixels in the expanded image is counted. For example, a dilation operation is performed on the original image shown in (a) in FIG. 18 by using a $3 \times 3$ cross-shaped structure element, to obtain a dilation image shown in (b) in FIG. 18, and a quantity of pixels A2 in the dilation image is counted. Finally, the global drawing service may obtain a line width W according to the following Formula ①.

$$\frac{A_1}{W} = \frac{A_2 - A_1}{2} - W \qquad \qquad \text{Formula ①}$$

In an example, the global drawing service may refine the connected area of the newly added writing stroke to a width of one pixel based on a binary image refinement algorithm (also referred to as an image skeleton extraction algorithm). For example, the original image (the connected area of the newly added writing stroke) is shown in (a) in FIG. 19, and an image obtained by refining the original image based on the binary image refinement algorithm is shown in (b) in FIG. 19. A size of the connected area of the newly added writing stroke divided by a size of the connected area of the refined image is the line width.

In an example, the global drawing service may extract a local binary pattern (local binary pattern, LBP) feature of the newly added writing stroke, and collect statistics on the LBP feature as a writing stroke texture feature, that is, a line texture. For example, the global drawing service may first obtain a grayscale value of each pixel in the newly added writing stroke. Then, as shown in FIG. 20, the global drawing service may define a $3\times3$ window, use a grayscale value of a central pixel of the window as a threshold, and compare the threshold with grayscale values of eight adjacent pixels in the window. If the grayscale value of the surrounding pixel is greater than the grayscale value of the central pixel, an LBP flag of the surrounding pixel is denoted as 1; or if the grayscale value of the surrounding pixel is less than or equal to the grayscale value of the central pixel, an LBP flag of the surrounding pixel is denoted as 0. Based on this, an 8-bit binary number corresponding to the window may be obtained, and the global drawing service may further convert the 8-bit binary number into a decimal number, to obtain an LBP feature value corresponding to the window, so as to reflect a line texture of a stroke area corresponding to the $3\times3$ window.

It is known that a difference between different brush types (for example, a pen, a pencil, a marker, a watercolor pen, and an oil paint pen) is mainly reflected in a texture of a main part of a writing stroke. Based on this, in an example, after the writing stroke texture feature of the newly added writing stroke is obtained: The global drawing service may classify the writing stroke texture feature based on a feature vector-based classification algorithm (for example, a histogram intersection kernel, or a machine learning manner combining principal component analysis (principal component analysis, PCA) dimensionality reduction and support vector machine (support vector machine, SVM)), to obtain the brush type.

Certainly, the foregoing method and specific process of obtaining the information such as the brush type, the line color, the line width, and the line texture that correspond to the newly added writing stroke are merely used as examples. In some other embodiments, another method in the conventional technology may alternatively be used to obtain brush mode parameters such as a brush type, a line color, a line width, and a line texture based on a newly added writing stroke. This is not limited in this embodiment of this application.

Certainly, a specific manner and process in which the global drawing service obtains the brush mode of the application are not limited in this embodiment of this application. For example, in another possible implementation, the global drawing service may obtain the brush mode of the application by obtaining a rendering command of the application, to learn the brush mode of the application. For example, the global drawing service may obtain an OpenGLES rendering pipeline command corresponding to the application, and parse out a brush attribute-related setting field from the OpenGLES rendering pipeline command, to determine the brush mode of the application.

Alternatively, in another possible implementation, the global drawing service may obtain a current brush mode parameter from the application, to learn the brush mode. The current brush mode parameter from the application may be a parameter corresponding to a default brush mode of the application, or may be a parameter corresponding to a brush mode that is last set by the user. This is not specifically limited in this embodiment of this application.

It should be noted that, in the foregoing embodiment of this application, the content interface may be an interface (for example, the first interface shown in (a) in FIG. 6) of the application installed on the electronic device in the single-device scenario shown in (a) in FIG. 6, or may be a content interface projected by the second electronic device onto the first electronic device or an extended interface (the first interface shown in (b) in FIG. 6) of the second electronic device in the multi-device scenario shown in (b) in FIG. 6.

In the single-device scenario, the electronic device is responsible for S701 to S705, and the electronic device is also responsible for a process in which the application responds to the handwriting operation, for example, drawing a writing stroke at the application layer. In the multi-device scenario, the first electronic device is responsible for S701 to S705. However, a device in which the application is located, that is, the second electronic device, is responsible for a process in which the application responds to the handwriting operation, for example, drawing a writing stroke at the application layer.

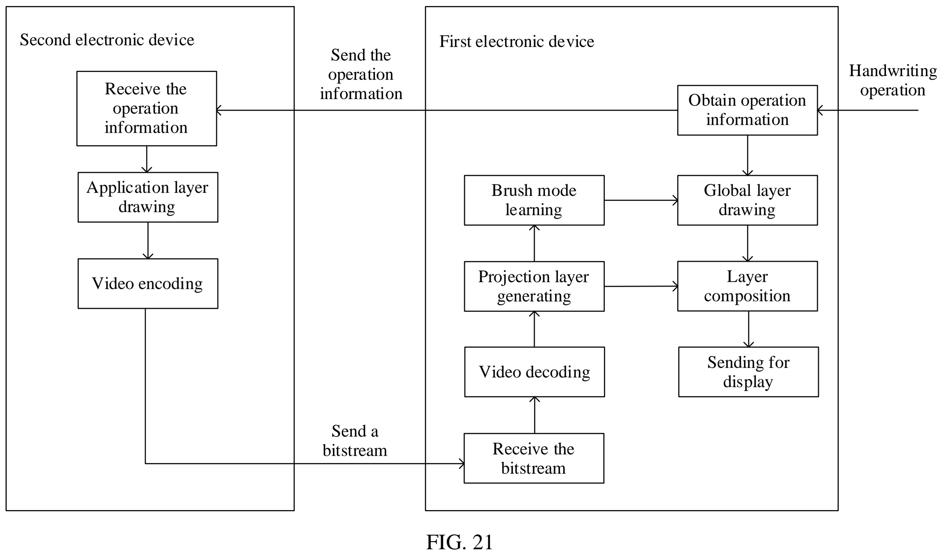

For example, in the multi-device scenario, when receiving an operation of triggering the handwriting function by the user, the first electronic device may create a global layer superimposed on the application layer corresponding to the content interface. Then, as shown in FIG. 21, when receiving the handwriting operation of the user, the first electronic device may determine, based on the handwriting operation, to obtain the operation information of the user. Then, the first electronic device may send the operation information to the second electronic device. In a subsequent global layer drawing process, the second electronic device may draw a writing stroke at a corresponding location on the content interface based on the operation information, and send, to the first electronic device, a bitstream obtained by performing video encoding at the application layer obtained through drawing. After receiving the bitstream from the second electronic device, the first electronic device generates a projection layer (that is, the application layer) after performing video decoding on the bitstream, and temporarily stores the projection layer in a corresponding buffer. In addition, the first electronic device may perform global layer drawing based on the operation information, for example, determine the touch point of the user based on the operation information, and determine the plurality of predicted points based on the touch point of the user and the historical writing stroke. Then, the first electronic device draws a corresponding writing stroke at the global layer based on the touch point and the plurality of predicted points, then performs layer composition on the writing stroke and the projection layer, and sends the writing stroke for display. In the foregoing process, the first electronic device may also learn the brush mode of the writing stroke at the projection layer, and draw the writing stroke at the global layer by using a brush mode parameter consistent with that of the brush mode of the writing stroke at the projection layer, to ensure consistent visual experience for the user.

For other details in a process of displaying the handwritten content in the multi-device scenario, refer to related descriptions in the foregoing embodiments. Details are not described herein again.

It should be understood that the solutions in embodiments of this application may be appropriately combined for use, and explanations or descriptions of terms in the embodiments may be mutually referenced or explained in the embodiments. This is not limited.

It should further be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

It may be understood that, to implement functions of any one of the foregoing embodiments, the electronic device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

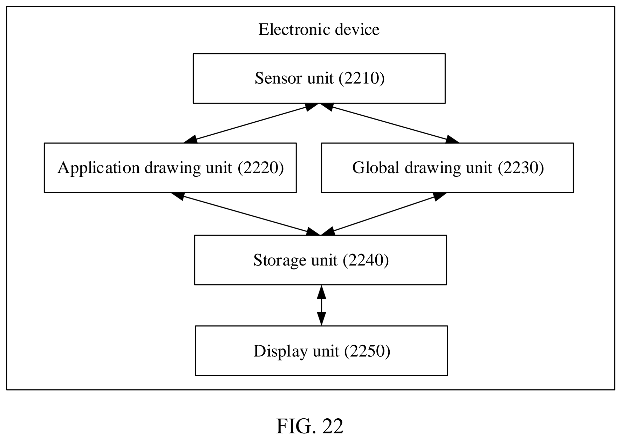

In an example, as shown in FIG. 22, an electronic device may include a sensor unit 2210, an application drawing unit 2220, a global drawing unit 2230, a storage unit 2240, and a display unit 2250 based on division of functional modules. The sensor unit 2210 is configured to detect a user operation and obtained operation information, and/or another process related to this embodiment of this application. The application drawing unit 2220 is configured to draw an application layer, and/or another process related to this embodiment of this application. The global drawing unit 2230 is configured to draw a global layer, and/or another process related to this embodiment of this application. The storage unit 2240 is configured to store computer program instructions and data created during use of the electronic device, for example, an application layer, a global layer, and a historical writing stroke. The display unit 2250 is configured to display an interface, for example, display a content interface and a writing stroke. Certainly, in some examples, the electronic device may alternatively include another unit, for example, a communication unit. The communication unit may be used by the electronic device to communicate with another electronic device, for example, receive a video stream (for example, a bitstream) from a projection device in a multi-device scenario, and send, to the projection device, the operation information of the user for the content interface. This is not specifically limited in this embodiment of this application.

It should be further understood that each module in the electronic device may be implemented in a form of software and/or hardware. This is not specifically limited herein. In other words, the electronic device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, all or some of the processes or functions in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state disk, SSD)), or the like.

Method or algorithm steps described in combination with embodiments of this application may be implemented by hardware, or may be implemented by a processor by executing software instructions. The software instruction may include a corresponding software module. The software module may be located in a RAM memory, a flash memory, a ROM memory, an EPROM memory, an EEPROM memory, a register, a hard disk, a removable hard disk, a CD-ROM, or a storage medium of any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an electronic device. Certainly, the processor and the storage medium may exist as discrete components.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

**Claims**

1. A method for displaying handwritten content, wherein the method is applied to an electronic device, and the method comprises:

   when displaying a content interface, creating, in response to an operation of triggering a handwriting function by a user, a global layer superimposed on an application layer corresponding to the content interface, wherein the global layer is a transparent layer;
   determining a corresponding touch point based on a handwriting operation of the user on the content interface;
   drawing a corresponding writing stroke at the global layer based on the touch point; and
   displaying a second interface after composing the application layer and the global layer, wherein the second interface comprises the content interface and the writing stroke.

2. The method according to claim 1, wherein drawing the corresponding writing stroke at the global layer based on the touch point comprises:

   determining a plurality of predicted points based on the touch point and a historical writing stroke; and
   drawing the corresponding writing stroke at the global layer based on the touch point and the plurality of predicted points.

3. The method according to claim 2, wherein the method further comprises:
   drawing a corresponding writing stroke at the application layer based on the handwriting operation.

4. The method according to claim 2, wherein the content interface is generated based on projection data sent by a second electronic device, and the method further comprises:

   sending, to the second electronic device, operation information corresponding to the handwriting operation, for the second electronic device to perform corresponding drawing at the application layer based on the operation information; and
   receiving interface data from the second electronic device, wherein the interface data comprises information about a writing stroke corresponding to the handwriting operation.

5. The method according to claim 3 or 4, wherein the historical writing stroke is drawn at the application layer, and drawing the corresponding writing stroke at the global layer based on the touch point and the plurality of predicted points comprises:
   drawing the corresponding writing stroke at the global layer based on the touch point and the plurality of predicted points by using a brush mode consistent with that of the historical writing stroke.

6. The method according to claim 5, wherein the method further comprises:
   obtaining a brush mode parameter corresponding to the historical writing stroke, wherein the brush mode parameter comprises one or more of the following: a brush type, a line color, a line width, and a line texture.

7. The method according to claim 6, wherein obtaining a brush mode parameter corresponding to a latest writing stroke in the historical writing stroke comprises:
performing image analysis on the latest writing stroke in the historical writing stroke, and obtaining the brush mode parameter corresponding to the latest writing stroke.

8. The method according to claim 7, wherein the method further comprises:
in a process of drawing the writing stroke at the global layer, erasing, from the global layer, a second handwriting stroke corresponding to a first handwriting stroke drawn at the application layer.

9. The method according to claim 7, wherein the method further comprises:
in a process of drawing the writing stroke at the global layer, erasing a handwriting stroke drawn at the global layer before a preset time period.

10. The method according to any one of claims 1 to 9, wherein
the handwriting operation is an operation of the user on the content interface by using a finger or a touch auxiliary tool, wherein the touch auxiliary tool comprises any one of the following tools: a stylus, a touch stylus, and a touch ball.

11. The method according to any one of claims 1 to 10, wherein the handwriting operation comprises any one of the following operations of the user on the content interface: line drawing, writing, circling, and marking.

12. An electronic device, wherein the electronic device comprises:

a display, configured to display an interface;
a memory, configured to store computer program instructions; and
a processor, configured to execute the computer program instructions, to support the electronic device in implementing the method according to any one of claims 1 to 11.

13. A computer-readable storage medium, wherein the computer-readable storage medium stores computer program instructions, and when the computer program instructions are executed by a processing circuit, the method according to any one of claims 1 to 11 is implemented.

14. A computer program product comprising instructions, wherein when the computer program product runs on a computer, the computer is caused to perform the method according to any one of claims 1 to 11.

15. A chip system, wherein the chip system comprises a processing circuit and a storage medium, the storage medium stores computer program instructions, and when the computer program instructions are executed by the processing circuit, the method according to any one of claims 1 to 11 is implemented.

A          B

▬▬▬     Line displayed on an electronic device

───     Touch stroke of a stylus

FIG. 1

T1

**Touch bottom-layer processing**

Touch information

↓

Preset processing algorithm

T2

**Input event processing**

InputReader

↓

T3

InputDispatcher

T4

**Drawing**

doFrame

↓

Measurement

↓

Layout

↓

Drawing

T5

**Rendering**

DrawFrame

↓

eglSwapBuffersWithDamageKHR

T6

**Composition**

onMessageReceived

↓

setUpHWComposer

↓

doComposition

T7

Display

T8

FIG. 2

Touch latency without a stroke
estimate mechanism being used

Touch latency with a
stroke estimate
mechanism being used

▬▬▬ Writing stroke displayed by an electronic
device based on an input event

—— Sliding route of a stylus

• Predicted point

▬▬ Writing stroke displayed by the electronic
device based on the predicted point

FIG. 3

Electronic device

Antenna 1

Antenna 2

| Mobile communication module 2G/3G/4G/5G [450] | Wireless communication module BT/WLAN/GNSS/NFC/IR/FM [460] |

Speaker [470A]

Microphone [470C]

Audio module [470]

Receiver [470B]

Headset jack [470D]

Processor [410]

Sensor module [480]

Touch sensor [480A]

Pressure sensor [480B]

Motor [491]

Button [490]

Display [494]

Camera [493]

Indicator [492]

Internal memory [421]

External memory interface [420]

USB interface [430]

Charging input

Charging management module [440]

Power management module [441]

Battery [442]

FIG. 4

FIG. 5

Electronic device

First interface

(a)

Second electronic device

First interface

Operation information

First electronic device

First interface

Data stream of a content interface

(b)

FIG. 6

S701

When displaying a content interface, an electronic device receives an operation of triggering a handwriting function by a user

S702

The electronic device creates a global layer, where the global layer is superimposed on an application layer corresponding to the content interface

S703

The electronic device receives a handwriting operation of the user on the content interface

S704

The electronic device determines a touch point of the user based on the handwriting operation, and determines a plurality of predicted points based on the touch point of the user and a historical writing stroke

S705

The electronic device draws a corresponding writing stroke at the global layer based on the touch point and the plurality of predicted points

S706

The electronic device displays a second interface, where the second interface includes the content interface and the writing stroke, the content interface is drawn at the application layer, and the writing stroke is drawn at the global layer

FIG. 7

FIG. 8

Content interface

Sliding stroke of a stylus corresponding
to a handwriting operation 901

Historical
writing stroke

FIG. 9

Application layer

Historical writing stroke

Writing stroke 1

Touch latency 1

Global layer

Historical writing stroke

Writing stroke 2

Touch latency 2

Writing stroke 3

Writing stroke 1: writing stroke drawn by an application based on a handwriting operation

: Sliding route of a stylus on a screen

Writing stroke 2: writing stroke drawn by a global drawing service based on a touch point

O Predicted point

Writing stroke 3: writing stroke drawn by the global drawing service based on a predicted point

Composition (the global layer is superimposed on the application layer)

Application layer

Global layer

Touch latency 2

FIG. 10

Application layer

Global layer

Historical writing stroke

Writing stroke 2

Touch latency 2

Writing stroke 3

⟍ : Sliding route of a stylus on a screen

Writing stroke 2: writing stroke drawn by a global drawing service based on a touch point

○    Predicted point

Writing stroke 3: writing stroke drawn by the global drawing service based on a predicted point

Composition (the global layer is superimposed on the application layer)

Application layer

Global layer

Touch latency 2

FIG. 11

Writing stroke 1: writing stroke drawn by an application based on a handwriting operation

Writing stroke 2: writing stroke drawn by a global drawing service based on a touch point

Writing stroke 3: writing stroke drawn by the global drawing service based on a predicted point

⟍ : Sliding route of a stylus on a screen

FIG. 12

Writing stroke 1: writing stroke drawn by an application based on a handwriting operation

Writing stroke 2: writing stroke drawn by a global drawing service based on a touch point

Writing stroke 3: writing stroke drawn by the global drawing service based on a predicted point

FIG. 13

Drawing latency at an application layer without stroke estimate

Display latency that can be compensated by a prediction algorithm

Display latency at the application layer with stroke estimate

Application 1 — T1 → Prediction algorithm 1 → Δt1 → T1−Δt1

Application 2 — T2 → Prediction algorithm 2 → Δt2 → T2−Δt2

Application 3 — T3 → Prediction algorithm 3 → Δt3 → T3−Δt3

Application 4 — T4 → T4

(a)

Drawing latency at a global layer without stroke estimate

Display latency that can be compensated by a prediction algorithm

Display latency at the global layer with stroke estimate

Application 1
Application 2
Application 3
Application 4

→ T′ → Global prediction algorithm → Δt′ → T′−Δt′

(b)

FIG. 14

Application layer    Global layer

(a)

Application layer    Global layer

(b)

FIG. 15

Current frame of image           Previous frame of image

Compare

Changed layer area

Content difference calculation

Newly added writing stroke

FIG. 16

FIG. 17

EP 4 693 013 A1

(a)

(b)

FIG. 18

(a)

(b)

FIG. 19

FIG. 20

FIG. 21

Electronic device

Sensor unit (2210)

Application drawing unit (2220)

Global drawing unit (2230)

Storage unit (2240)

Display unit (2250)

FIG. 22

## INTERNATIONAL SEARCH REPORT

| International application No. |
|---|
| **PCT/CN2024/099430** |

### A. CLASSIFICATION OF SUBJECT MATTER

G06F 3/04883(2022.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 手写, 界面, 叠加, 图层, 全局, 透明, 报点, 历史, 预测, 轨迹, 笔迹, 滞后, 跟手, 时延, 延时, 延迟, stylus, interface, overlap, layer, global, transparent, point, history, predict, trace, track, lag, follow, delay

### C. DOCUMENTS CONSIDERED TO BE RELEVANT

| Category* | Citation of document, with indication, where appropriate, of the relevant passages | Relevant to claim No. |
|---|---|---|
| Y | CN 112486374 A (IREADER TECHNOLOGY CO., LTD. et al.) 12 March 2021 (2021-03-12) description, paragraphs [0025]-[0090], and figures 1-4 | 1-15 |
| Y | CN 115480658 A (HUAWEI TECHNOLOGIES CO., LTD.) 16 December 2022 (2022-12-16) description, paragraphs [0070]-[0185], and figures 1-13 | 1-15 |
| A | CN 110703978 A (IREADER TECHNOLOGY CO., LTD. et al.) 17 January 2020 (2020-01-17) entire document | 1-15 |
| A | WO 2023016430 A1 (GUANGZHOU SHIYUAN ELECTRONICS CO., LTD. et al.) 16 February 2023 (2023-02-16) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 August 2024** | **12 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/099430**

| Patent document cited in search report | | | Publication date (day/month/year) | Patent family member(s) | | | Publication date (day/month/year) |
|---|---|---|---|---|---|---|---|
| CN | 112486374 | A | 12 March 2021 | None | | | |
| CN | 115480658 | A | 16 December 2022 | WO | 2022247456 | A1 | 01 December 2022 |
| | | | | EP | 4325336 | A1 | 21 February 2024 |
| | | | | RU | 2023134984 | A | 15 January 2024 |
| | | | | JP | 2024520504 | A | 24 May 2024 |
| CN | 110703978 | A | 17 January 2020 | WO | 2021056780 | A1 | 01 April 2021 |
| | | | | US | 2022391084 | A1 | 08 December 2022 |
| WO | 2023016430 | A1 | 16 February 2023 | CN | 115705104 | A | 17 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310861306